# EUROPEAN PATENT SPECIFICATION

(11) **EP 4 273 200 B1**
(45) Date of publication and mention of the grant of the patent: **25.03.2026**
(21) Application number: 22172087.3
(22) Date of filing: 06.05.2022
(51) Int. Cl.: C09D 11/101, C08K 5/00, C09D 4/00

(54) **PHOTOINITIATOR PACKAGE COMPRISING SPECIALISED BISACYLPHOSPHINE OXIDE PHOTOINITIATORS AND OPTICAL BRIGHTENER SENSITIZERS**
PHOTOINITIATORPAKET MIT SPEZIELLEN BISACYLPHOSPHINOXID-PHOTOINITIATOREN UND OPTISCHEN AUFHELLER-SENSIBILISATOREN
EMBALLAGE DE PHOTOINITIATEURS COMPRENANT DES PHOTOINITIATEURS SPÉCIALISÉS À BASE D'OXYDE DE BISACYLPHOSPHINE ET DES SENSIBILISATEURS AZURANTS OPTIQUES

(43) Date of publication of application: 08.11.2023
(73) Proprietor: IGM Group B.V., 5145 RM Waalwijk (NL)
(72) Inventor: MORONE, Marika, 22030 Lipomo (IT); CREMONA, Emilio, 21040 Venegono Superiore (VA) (IT)
(74) Representative: Maiwald GmbH

(56) References cited:
- WO-A1-2021/070131
- US-A1- 2016 039 851
- US-A1- 2021 347 919

## Description

### Field of the Invention

The present invention relates to a photoinitiator package comprising one or more bisacylphosphine oxide photoinitiators and one or more optical brightener sensitizers, a photopolymerizable composition comprising the photoinitiator package and suitable polymerizable compounds, a method for polymerizing the photopolymerizable composition and a use of the photoinitiator package in photopolymerization applications.

### Background to the Invention

Photoinitiators for promoting the radical polymerisation of ethylenically unsaturated compounds may be classed as either Norrish Type-I, wherein an electronically excited photoinitiator fractures to form a free radical that acts to initiate the radical polymerisation, or Norrish Type-II, wherein an electronically excited photoinitiator abstracts a hydrogen radical from a further molecule to form a free radical from said further molecule, said free radical acting to initiate the radical polymerisation. Whilst Type-II photoinitiators require the presence of certain additives/co-initiators, these additives/co-initiators are not generally required for Type-I photoinitiators.

The development of new Type-I photoinitiators is a key area of research in the field of resin curing. In addition to the provision of novel Type-I photoinitiators, the provision of Type-I photoinitiator packages, wherein the activity of the Type-I photoinitiator is enhanced by the presence of other compounds, such as photosensitizers. These compounds absorb light at a different wavelength to that of the photoinitiator itself and transfer energy to the photoinitiator, improving the energy absorption by the photoinitiator.

Phosphine oxides are a well-known family of Type-I photoinitiators that provide excellent activity due to the highly reactive phosphinoyl radical formed upon fragmentation. Whist excellent photoinitiators in deep-cure systems, they are notoriously much less effective at achieving surface curing. As such, blends of phosphine oxide photoinitiators with other photoinitiators known to be more effective at surface curing are often used to ensure a thorough cure.

How well different Type-I photoinitiators interact with sensitizers is difficult to predict and often depends on the structure and energy levels of the photoinitiator. The provision of highly active photoinitiator packages is desirous as improved photopolymerization may be achieved without the need to develop new photoinitiators. In particular, an improvement of the surface curing abilities of phosphine oxide photoinitiators would allow these powerful photoinitiators to be more broadly applied.

WO 2021/070131 A1 relates to a homogeneous liquid/fluid combination of photoinitiators with improved formulability, reactivity and surface curing performances, more particularly to novel combinations of acylphospine oxides and ketocoumarins, optionally further combined with at least one co-inititator. US 2021/0347919 A1 relates to multifunctional bisacylphosphine oxides, which are useful as photoinitiators, and to compositions comprising said photoinitiators, as well as a process for photocuring and to articles of manufacture prepared by said process. US 2016/039851 A1 relates to certain bisacylphosphine oxides or bisacylphosphine sulfide compounds and their use as photoinitiators.

### Summary of the Invention

The present observation is based on the observation that combinations of sensitizers and certain bisacylphosphine oxide photoinitiators have unexpectedly excellent photoinitiator properties, including surface curing ability.

The present invention, in a first aspect, is thus directed to a photoinitiator package comprising:
a) one or more bisacylphosphine oxide photoinitiators, each having a structure according to formula (I): 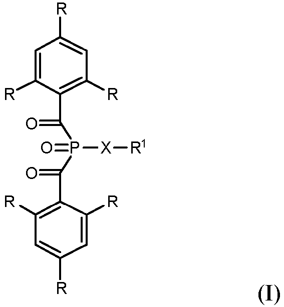
   wherein each instance of R is independently selected from the group consisting of C₁-C₄ alkyl;
   wherein X is a direct single bond;
   wherein R¹ is selected from the group consisting of C₁-C₄₀ alkyl and interrupted C₂-C₄₀ alkyl being interrupted by one or more O or C₃-C₈ cycloalkylene, wherein said C₁-C₄₀ alkyl or interrupted C₂-C₄₀ alkyl may be unsubstituted or substituted by one or more groups selected from OH and R²;
   wherein R² is 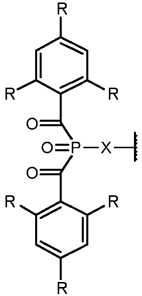
b) one or more optical brightener sensitizers,

wherein the photoinitiator package may also comprise one or more amines, and
if further components other than the one or more bisacylphosphine oxide photoinitiators having a structure according to formula (I), the one or more optical brightener sensitizers and the optional one or more amines are present, then they are further Type-I or Type-II photoinitiators.

In a second aspect, the present invention is directed to a photopolymerizable composition, comprising:
a) one or more ethylenically unsaturated, free-radical polymerizable compounds;
b) the photoinitiator package according to the first aspect.

In a third aspect, the present invention is directed to a method for photocuring photopolymerizable compositions, coatings, adhesives and inks, said method comprising the following steps in the given order:
a) coating or printing the photopolymerizable composition according to the second aspect onto a substrate, and
b) photopolymerizing said coated or printed composition with a light source on said substrate.

In a final aspect, the present invention is directed to a use of the photoinitiator package according to the first aspect in the production of printing inks, screen-printing inks, gravure printing inks, solder masks, etch offset-printing inks, flexographic- printing inks, gravure printing inks, ink jet inks, resist material, insulators, encapsulants, image-recording material, solder mask, passivation layer, protective coating, 3D-printing objects and molds, holographic applications, optical fiber coating, waveguide and lens, overprint varnish, wood, vinyl, metal and plastic coatings.

### Definitions

In the present description the expressions "alkyl" or "alkyl group" mean, where not differently indicated, a linear or branched, saturated alkyl chain containing the given number of carbon atoms and includes all possibilities for each number of carbon atoms in the alkyl group, i.e. for three carbon atoms: n-propyl and i-propyl; for four carbon atoms: n-butyl, i-butyl, s-butyl and t-butyl etc..

The expressions "aryl" or "aryl group" include, for example, a substituted or unsubstituted aryl group, such as a substituted or unsubstituted phenyl group, a substituted or unsubstituted naphthyl group, an anthracenyl group, an indenyl group, a fluorenyl group.

The expressions "heteroaryl" or "heteroaryl group" include, for example, a substituted or unsubstituted heteroatom-containing aromatic ring system, such as pyridine, pyrrole, furan, triazine, indole, quinolone, thiophene etc.

The expression "C₁-C₄₀ alkyl which is interrupted by one or more oxygens" means that, in case more than one oxygen atom is present, said oxygen atoms are separated from one another by at least one methylene group, i.e. the oxygen atoms are non-consecutive. Examples include the following: - OCH₂OCH₃, -OCH₂CH₂OCH₂CH₃, -O[CH₂CH₂O]ᵥCH₃, -O[CH₂CH₂O]ᵥOH, - O[CH₂CH₂O]ᵥCH₂CH₃, -CH₂O[CH₂CH₂O]ᵥCH₃ with v=1-19, -O[CH₂CH₂CH₂O]ₚOH, -O[CH₂CH₂CH₂O]ₚCH₃, -O[CH₂CH₂CH₂O]ₚCH₂CH₃, - CH₂O[CH₂CH₂CH₂O]ₚCH₃ with p=1-12.

When a group is substituted, the term "substituted" means that said group bears one or more substituents, said substituents being preferably selected from halogen atom, alkyl, cycloalkyl, alkoxy, alkylamino, dialkylamino, alkylthio or arylthio group, heterocyclic groups; more preferably selected from methyl, ethyl, isopropyl, tert-butyl, phenyl, trifluoromethyl, cyano, acetyl, ethoxycarbonyl, carboxyl, carboxylate, amino, methylamino, dimethylamino, ethylamino, diethylamino, isopropylamino, diisopropylamino, cyclohexylamino, dicyclohexylamino, acetylamino, piperidino, pyrrolidyl, methoxy, ethoxy, propoxy, isopropoxy, butoxy, pentyloxy, phenoxy, hydroxyl, acetoxy, - PO₃H, methylthio, ethylthio, i-propylthio, n-propylthio, phenyltio, mercapto, acetylthio, thiocyano, methylsulfinyl, methylsulfonyl, dimethylsulfonyl, sulfonate groups, fluorine atom, chlorine atom, bromine atom, iodine atom, trimethylsilyl, pentamethyldisilyl, triethylsilyl, trimethylstannyl, furyl, thienyl, pyridyl and morpholino.

The expression "a direct bond" means that a linking group is not present, and a direct bond links the two moieties on either side.

A methylene group refers to an sp³ hybridised carbon connected to two hydrogen groups, i.e. -CH₂R, whilst a methanetriyl group refers to an sp³ hybridised carbon connrected to one hydrogen group, i.e. - CHR₂.

Photoinitiators may be classed as either Norrish Type-I, wherein an electronically excited photoinitiator fractures to form a free radical that acts to initiate the radical polymerisation, or Norrish Type-II, wherein an electronically excited photoinitiator abstracts a hydrogen radical from a further molecule to form a free radical from said further molecule, said free radical acting to initiate the radical polymerisation, as is well understood by the person skilled in the art.

### Detailed Description

### Bisacylphosphine oxide photoinitiator(s)

One of the essential features of the photoinitiator package according to the present invention is one or more bisacylphosphine oxide photoinitiators.

The one or more bisacylphosphine oxide photoinitiators each have a structure according to formula (I) 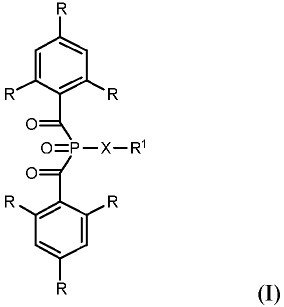
wherein each instance of R is independently selected from the group consisting of C₁-C₄ alkyl;
wherein X is a direct single bond;
wherein R¹ is selected from the group consisting of C₁-C₄₀ alkyl and interrupted C₂-C₄₀ alkyl being interrupted by one or more O or C₃-C₈ cycloalkylene, wherein said C₁-C₄₀ alkyl or interrupted C₂-C₄₀ alkyl may be unsubstituted or substituted by one or more groups selected from OH and R²;
wherein R² is

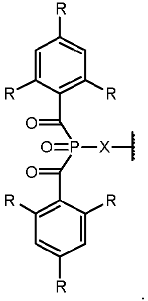

Each instance of R may be independently selected from the group consisting of C₁-C₄ alkyl, i.e. from methyl, ethyl, n-propyl, i-propyl, n-butyl, s-butyl, i-butyl and t-butyl. It is particularly preferred that each instance of R is selected from methyl and ethyl. Most preferably each instance of R is methyl.

X is a direct single bond.

R¹ is selected from the group consisting of C₁-C₄₀ alkyl and interrupted C₂-C₄₀ alkyl being interrupted by one or more O or C₃-C₈ cycloalkylene, wherein said C₁-C₄₀ alkyl or interrupted C₂-C₄₀ alkyl may be unsubstituted or substituted by one or more groups selected from OH and R²;
wherein R² is

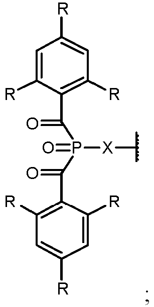

In some embodiments no R² is present, meaning that the structure according to Formula (I) has a single bisacylphosphine oxide moiety.

In such embodiments, it is preferred that R¹ is selected from the group consisting of C₁-C₂₀ alkyl, -(CH₂CH₂O-)ₙCH₃, and -(CH₂CH₂O-)ₙH, wherein n is an integer in the range from 1 to 20. It is particularly preferred that R¹ is C₁-C₂₀ alkyl.

It is particularly preferred that each instance of R is methyl.

In other embodiments, at least one instance of R² is present, meaning that the structure according to Formula (I) has more than one bisacylphosphine oxide moiety.

Such embodiments are preferably described by Formula (I) wherein R¹ has a structure according to formula (II): 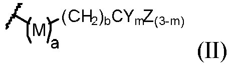
wherein each instance of M is independently selected from (CH₂CH₂O) and (CH₂CH(CH₃)O);
wherein each instance of Y is independently selected from hydrogen and C₁-C₄ alkyl;
wherein each instance of Z has the structure CH₂(M¹)_{c}R²;
wherein each instance of M¹ is independently selected from (OCH₂CH₂) and (OCH(CH₃)CH₂)
wherein a is an integer in the range from 0 to 15;
wherein b is an integer in the range from 0 to 6;
wherein each instance of c is independently an integer in the range from 0 to 15;
wherein m is an integer in the range from 0 to 2; and
wherein each instance of X is independently selected from the group consisting of -CH₂CO₂-, and -CH₂CH₂CO₂-.

Such structures are typically formed by combining a central polyol core with multiple BAPO-based carboxylic acid residues, wherein ethylene glycol/propylene glycol spacers (i.e. units M and M¹) are optionally used to separate the central polyol core from the BAPO-based carboxylic acid residues.

Suitable polyol cores include glycerol, wherein b= 0, m = 1 and Y =H, trimethylolpropane, wherein b = 1, m = 1 and Y = ethyl, pentaerythritol, wherein b =1, m = 0, neopentyl glycol, wherein b= 1 m =2 and both instances of Y = methyl, ethylene glycol, wherein b = 0, m = 2, and both instances of Y = H; 1,6-hexanediol, wherein b = 4, m = 2 and both instances of Y = H.

Other suitable polyols include propylene glycol, 1,2-butanediol, 1,3-butanediol, 1,4-butanediol, 2,3-butanediol, 1,2-hexanediol, 1,5-hexanediol, 2,5-hexanediol. The skilled person would be aware of which values of b and m as well as choice of Y correspond to these polyols.

Particularly preferred polyol cores are glycerol, wherein b= 0, m = 1 and Y =H, trimethylolpropane, wherein b = 1, m = 1 and Y = ethyl, pentaerythritol, wherein b =1, m = 0.

When a gylcerol core is used, R¹ is termed "optionally ethoxylated/propoxylated glycerol".

When a trimethylolpropane core is used, R¹ is termed "optionally ethoxylated/propoxylated trimethylolpropane".

When a pentaerythritol core is used, R¹ is termed "optionally ethoxylated/propoxylated pentaerythritol".

When a neopentyl glycol core is used, R¹ is termed "optionally ethoxylated/propoxylated neopentyl glycol".

When an ethylene glycol core is used, R¹ is termed "optionally ethoxylated/propoxylated ethylene glycol".

When a 1,6-hexanediol core is used, R¹ is termed "optionally ethoxylated/propoxylated 1,6-hexanediol".

It is particularly preferred that a is an integer in the range from 1 to 15 and each instance of c is an integer in the range from 1 to 15, wherein the sum of a and each instance of c is in the range from 3 to 20, more preferably in the range from 3 to 15, most preferably in the range from 3 to 10.

Such embodiments are termed "ethoxylated/propoxylated polyol", wherein polyol may be glycerol, trimethylolpropane, pentaerythritol, neopentyl glycol, ethylene glycol or 1,6-hexanediol.

It is particularly preferred that R¹ is selected from the group consisting of C₁-C₂₀ alkyl, -(CH₂CH₂O-)ₙCH₃, and -(CH₂CH₂O-)ₙH, wherein n is an integer in the range from 1 to 20, ethoxylated/propoxylated glycerol, ethoxylated/propoxylated trimethylolpropane, and ethoxylated/propoxylated pentaerythritol.

When R¹ is a C₁-C₂₀ alkyl, it is particularly preferred that R¹ is a C₁-C₁₅ alkyl, more preferably a C₁-C₁₂ alkyl.

Examples of particularly preferred bisacylphosphine oxide photoinitiators having a structure according to formula (I) include: 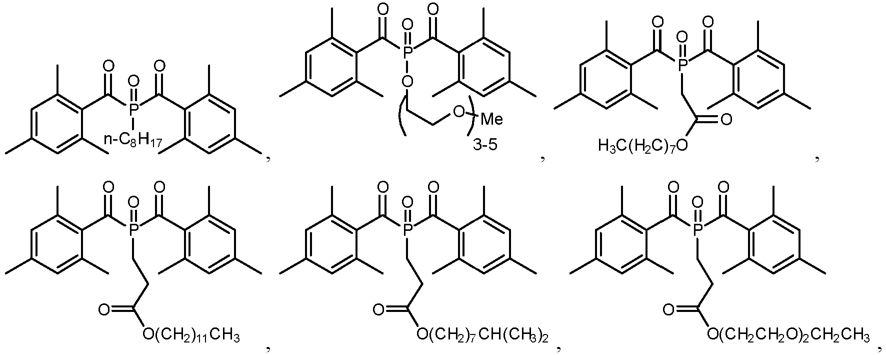 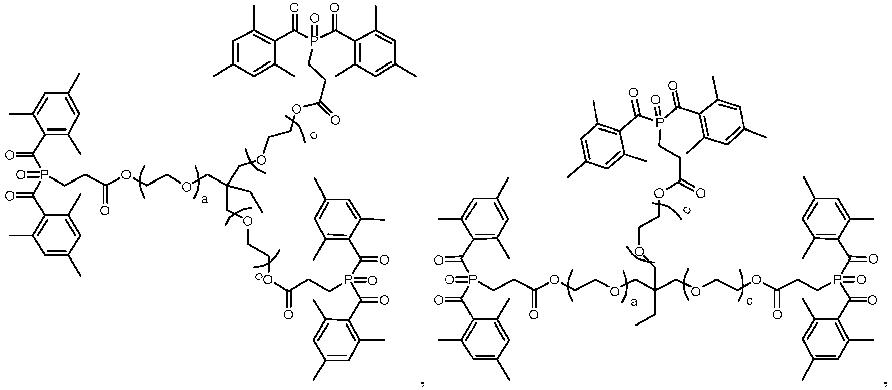 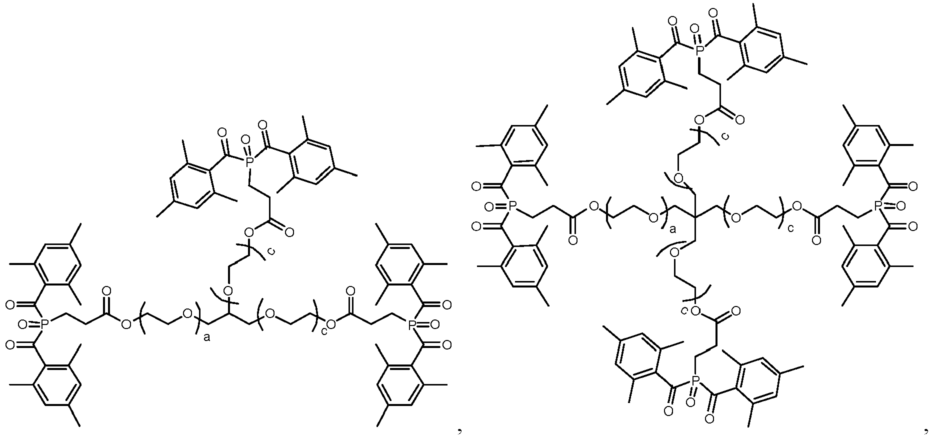 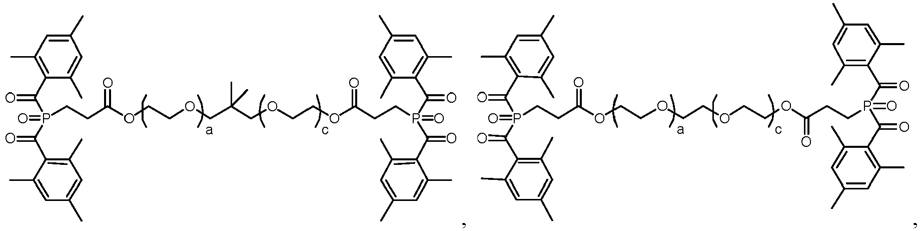 and 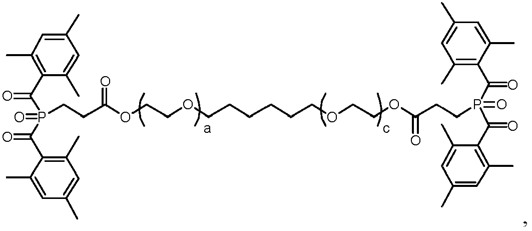 wherein each instance of a and each instance of c are independently as defined for formula (II).

### Optical brightener sensitizer(s)

The other essential feature of the photoinitiator package according to the present invention is the presence of one or more optical brightener sensitizers.

In the broadest sense, any compound known for use as an optical brightener may be used in the photoinitiator package according to the present invention.

Examples of such well-known optical brighteners include compounds with building blocks including stilbene, triazine, thioazole, benzoxale, coumarin, xanthene, triazole, oxazole, thiophene and pyrazoline.

Particularly preferred are optical brighteners having coumarin or (benz)oxazole cores.

In a first particularly preferred embodiment, at least one of the one or more optical brightener sensitizers has a structure according to formula (III): 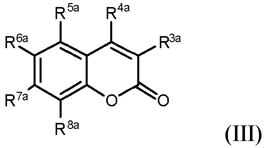
wherein R^{3a} is selected from the group consisting of hydrogen, C₁-C₁₀ alkyl, C₆-C₁₄ aryl, and C₆-C₁₄ heteroaryl,
R^{4a} is selected from the group consisting of hydrogen, C₁-C₁₀ alkyl, and OR^{1a}, and
each of R^{5a} to R^{8a} is independently selected from the group consisting of hydrogen, halogen, alkyl, OR^{1a}, and NR^{2a}₂;
wherein each instance of R^{1a} is selected from hydrogen, C₁-C₁₀ alkyl and C₆-C₁₄ aryl, and each instance of R^{2a} is selected from hydrogen, C₁-C₁₀ alkyl and C₆-C₁₄ aryl, wherein each instance of R^{1a} to R^{8a} may optionally be joined to one or more further instances of R^{1a} to R^{8a} to form one or more 5-membered or 6-membered rings.

In one preferred embodiment, R^{3a} is selected from the group consisting of hydrogen and C₁-C₁₀ alkyl, or R^{4a} is selected from the group consisting of hydrogen and C₁-C₁₀ alkyl.

In another preferred embodiment, R^{3a} is selected from the group consisting of hydrogen and C₁-C₁₀ alkyl, and R^{4a} is selected from the group consisting of hydrogen and C₁-C₁₀ alkyl.

In another preferred embodiment, R^{1a} is selected from the group consisting of OR^{1a}, and NR^{2a}₂, most preferably R^{1a} is NR^{2a}₂.

In a particularly preferred embodiment, R^{3a} is selected from the group consisting of hydrogen and C₁-C₁₀ alkyl or R^{4a} is selected from the group consisting of hydrogen and C₁-C₁₀ alkyl, whilst R^{1a} is selected from the group consisting of OR^{1a}, and NR^{2a}₂, most preferably R^{7a} is NR^{2a}₂.

In an especially preferred embodiment, R^{3a} is selected from the group consisting of hydrogen and C₁-C₁₀ alkyl, R^{4a} is selected from the group consisting of hydrogen and C₁-C₁₀ alkyl, and R^{1a} is selected from the group consisting of OR^{1a}, and NR^{2a}₂, most preferably R^{1a} is NR^{2a}₂.

At least one of, preferably all of, the coumarin-based sensitizers are selected from the group consisting of coumarin, 7-amino-4-(trifluoromethyl)coumarin, 3-(2-benzothiazolyl)-7-(diethylamino)coumarin, 7-hydroxy-4-(trifluoromethyl)coumarin, 7-(ethylamino)-4,6-dimethylcoumarin, 7-methoxy-4-(trifluoromethyl)coumarin, 7-ethoxy-4-(trifluoromethyl)coumarin, 7-amino-4-methylcoumarin, 7-(diethylamino)-4-methylcoumarin, 3-(2-benzoxazolyl)-7-(diethylamino)coumarin, 7-methylcoumarin, 7-methoxycoumarin, 4-hydroxycoumarin, 5,7-dimethoxycoumarin, 3-(3-biphenyl-4-yl-1,2,3,4-tetrahydro-1-naphthyl)-4-hydroxycoumarin, 6-methylcoumarin, 3-chloro-7-hydroxy-4-methylcoumarin, 7-hydroxycoumarin, 7-hydroxy-6-methoxycoumarin, 7-methoxy-6-hydroxycoumarin, 6-hydroxycoumarin, 7,8-dihydroxy-4-methylcoumarin, 7-Hydroxy-4-methylcoumarin, 7-(dimethylamino)-4-methylcoumarin, 2,3,6,7-Tetrahydro-9-methyl-1*H,*5*H,*11*H-*[1]benzopyrano[6,7,8-*ij*]quinolizin-11-one, 7-(diethylamino)-4-(trifluoromethyl)-coumarin, and 7-(ethylamino)-4-(trifluoromethyl)coumarin.

More preferably, at least one of, preferably all of, of the coumarin-based sensitizers are selected from the group consisting of coumarin, 3-(2-benzothiazolyl)-7-(diethylamino)coumarin, 7-methoxy-4-(trifluoromethyl)coumarin, 7-ethoxy-4-(trifluoromethyl)coumarin, 7-(diethylamino)-4-methylcoumarin, 3-(2-benzoxazolyl)-7-(diethylamino)coumarin, 7-methylcoumarin, 7-methoxycoumarin, 5,7-dimethoxycoumarin, 6-methylcoumarin, 7-(dimethylamino)-4-methylcoumarin, 2,3,6,7-Tetrahydro-9-methyl-1H,5H,11H-[1]benzopyrano[6,7,8-ij]quinolizin-11-one, 7-(diethylamino)-4-(trifluoromethyl)-coumarin, and 7-(ethylamino)-4-(trifluoromethyl)coumarin.

Most preferably, at least one of, preferably all of, of the coumarin-based sensitizers are selected from the group consisting of coumarin, 7-(diethylamino)-4-methylcoumarin, 7-methylcoumarin, 7-methoxycoumarin, 5,7-dimethoxycoumarin, and 7-(diethylamino)-4-(trifluoromethyl)-coumarin.

In a second particularly preferred embodiment, at least one of the one or more optical brightener sensitizers has a structure according to formula (IV): 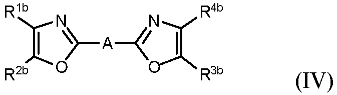 wherein each of R^{1b} to R^{4b} is independently selected from the group consisting of hydrogen, C₁-C₁₀ alkyl and C₆-C₁₄ aryl, wherein R^{1b} and R^{2b} may be joined to form a 6-membered saturated or unsaturated ring, which may be substituted by one or more substituents selected from the group consisting of hydrogen C₁-C₁₀ alkyl and C₆-C₁₄ aryl and wherein R^{3b} and R^{4b} may be joined to form a 6-membered saturated or unsaturated ring, which may be substituted by one or more substituents selected from the group consisting of hydrogen C₁-C₁₀ alkyl and C₆-C₁₄ aryl; and wherein A represents a linking group represented by any of the following formulas (V) to (IX): 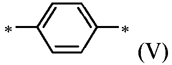 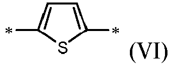 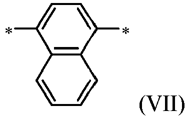 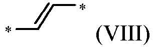 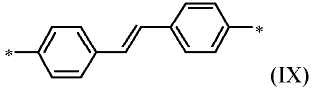 wherein each * represents a bonding position of A in each formula.

Each of R^{1b} to R^{4b} is independently selected from the group consisting of hydrogen, C₁-C₁₀ alkyl and C₆-C₁₄ aryl, wherein R^{1b} and R^{2b} may be joined to form a 6-membered saturated or unsaturated ring, which may be substituted by one or more substituents selected from the group consisting of hydrogen C₁-C₁₀ alkyl and C₆-C₁₄ aryl and wherein R^{3b} and R^{4b} may be joined to form a 6-membered saturated or unsaturated ring, which may be substituted by one or more substituents selected from the group consisting of hydrogen C₁-C₁₀ alkyl and C₆-C₁₄ aryl.

In one embodiment, each of R^{1b} to R^{4b} is independently selected from the group consisting of hydrogen, C₁-C₆ alkyl and C₆-C₁₀ aryl.

In a particularly preferred embodiment, both R^{1b} and R^{3b} are joined to R^{2b} and R^{4b}, respectively, to form 6-membered saturated or unsaturated rings, which may be substituted by one or more substituents selected from the group consisting of hydrogen C₁-C₁₀ alkyl and C₆-C₁₄ aryl.

In one embodiment of said particularly preferred embodiment, each 6-membered ring formed is aromatic, meaning that at least one of the the one or more oxazole-based sensitizers is a benzoxazole-based sensitizer, having a structure according to formula (X): 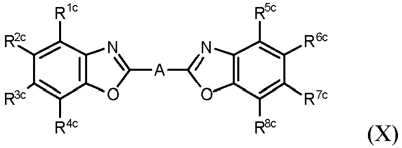 wherein each of R^{1c} to R^{8c} is independently selected from the group consisting of hydrogen, C₁-C₁₀ alkyl and C₆-C₁₄ aryl.

Preferably each of R^{1c} to R^{8c} is independently selected from the group consisting of hydrogen, C₁-C₆ alkyl and C₆-C₁₀ aryl.

In one embodiment, each of the one or more oxazole-based sensitizers has a structure according to formula (X).

In other embodiments, at least one of the one or more oxazole-based sensitizers has a structure according to formula (X), whilst any remaining oxazole-based sensitizers in the photoinitiator package have other structures according to formula (IV).

Particularly preferred compounds according to Formula (IV) include 2,5-thiophenediylbis(5-tert-butyl-1,3-benzoxazole), 2,2'-(vinylenedi-p-phenylene)bisbenzoxazole, 2,2'-(naphthalene-1,4-diyl)bis(benzoxazole), 2-[4-[2-[4-(benzoxazol-2-yl)phenyl]vinyl]phenyl]-5-methylbenzoxazole, 2,2'-(1,4-phenylene)bis[5-phenyl-oxazole].

### Photoinitiator package

The photoinitiator package according to the present invention comprises one or more bisacylphosphine oxide photoinitiators as described above and one or more optical brightener sensitizers as described above.

It is preferred that the photoinitiator package comprises:
a) an amount in the range from 40 to 99.9 wt.-%, more preferably in the range from 60 to 99.0 wt.-%, most preferably in the range from 65 to 97.0 wt.-%, relative to the total weight of the photoinitiator package, of the one or more bisacylphosphine oxide photoinitiators having a structure according to formula (I); and
b) an amount in the range from 0.1 to 50 wt.-%, more preferably in the range from 1.0 to 40 wt.-%, most preferably in the range from 3.0 to 35 wt.-%, relative to the total weight of the photoinitiator package, of the one or more optical brightener sensitizers.

In one embodiment, the photoinitiator package comprises:
a) an amount in the range from 40 to 99.9 wt.-%, relative to the total weight of the photoinitiator package, of the one or more bisacylphosphine oxide photoinitiators having a structure according to formula (I); and
b) an amount in the range from 0.1 to 50 wt.-%, relative to the total weight of the photoinitiator package, of the one or more optical brightener sensitizers.

In a further embodiment, the photoinitiator package comprises:
a) an amount in the range in the range from 60 to 99.0 wt.-%, relative to the total weight of the photoinitiator package, of the one or more bisacylphosphine oxide photoinitiators having a structure according to formula (I); and
b) an amount in the range from 1.0 to 40 wt.-%, relative to the total weight of the photoinitiator package, of the one or more optical brightener sensitizers.

In yet a further embodiment, the photoinitiator package comprises:
a) an amount in the range from 65 to 97.0 wt.-%, relative to the total weight of the photoinitiator package, of the one or more bisacylphosphine oxide photoinitiators having a structure according to formula (I); and
b) an amount in the range from 3.0 to 35 wt.-%, relative to the total weight of the photoinitiator package, of the one or more optical brightener sensitizers.

In addition to the one or more bisacylphosphine oxide photoinitiators and the one or more optical brightener sensitizers, the photoinitiator package may also comprise one or more amines.

In the broadest sense, the one or more amines according to the present invention may be any amine, including aliphatic, cycloaliphatic, aromatic, aryl aliphatic, heterocyclic, oligomeric or polymeric amines. They may be primary, secondary or tertiary amines, for example, butyl amine, dibutylamine, tributylamine, cyclohexyl amine, benzyldimethyl amine, dicyclohexyl amine, N-phenyl glycine, triethyl amine, phenyl-diethanol amine, triethanolamine, piperidine, piperazine, morpholine, quinolone, esters of dimethylamino benzoic acid, and corresponding derivatives. Furthermore, amine-modified acrylates can be used. Examples of such amine-modified acrylates include acrylates modified by reaction with a primary or secondary amine that are 15 described in US 3,844,916, EP 280222, US 5,482,649 or US 5,734,002.

Multifunctional amine and polymeric amine derivatives are also suitable for use are Omnipol ASA from IGM Resins B.V., Genopol AB-2 from Rahn A.G., Speedcure 7040 from Lambson Limited or those described in US2013/0012611.

It is preferred that the one or more amines have a so-called alpha-hydrogen, i.e. a hydrogen bonded to a carbon that is directly bonded to the nitrogen of the amine. It is particularly preferred that this hydrogen is bonded to an sp³-hybridized carbon. As such, it is preferred that the amine has a nitrogen atom having a direct single bond to either a methyl group (i.e. CH₃), a methylene group (i.e. the CH₂ of a CH₂R) or a methanetriyl group (i.e. the CH of a CHR₂).

Without wishing to be bound by theory, it is believed that the alpha-hydrogen may be easily abstracted by radicals, forming a stabilized alpha-amino-radical, which can play a role in improving the rate of curing, in particular by scavenging molecular oxygen, which may retard the polymerization reaction.

If present, the one or more amines is preferably present in an amount in the range from 1.0 to 45 wt.-%, more preferably in the range from 3.0 to 35 wt.-%, most preferably in the range from 5.0 to 30 wt.-%, relative to the total weight of the photoinitiator package.

As such, in one embodiment the photoinitiator package comprises, more preferably consists of:
a) an amount in the range from 40 to 98.9 wt.-%, more preferably in the range from 60 to 96.0 wt.-%, most preferably in the range from 65 to 92.0 wt.-%, relative to the total weight of the photoinitiator package, of the one or more bisacylphosphine oxide photoinitiators having a structure according to formula (I);
b) an amount in the range from 0.1 to 50 wt.-%, more preferably in the range from 1.0 to 37 wt.-%, most preferably in the range from 3.0 to 30 wt.-%, relative to the total weight of the photoinitiator package, of the one or more optical brightener sensitizers; and
c) an amount in the range from 1.0 to 45 wt.-%, more preferably in the range from 3.0 to 35 wt.-%, most preferably in the range from 5.0 to 30 wt.-%, relative to the total weight of the photoinitiator package, of one or more amines.

In a further embodiment, the photoinitiator package comprises, more preferably consists of:
a) an amount in the range from 40 to 98.9 wt.-%, relative to the total weight of the photoinitiator package, of the one or more bisacylphosphine oxide photoinitiators having a structure according to formula (I);
b) an amount in the range from 0.1 to 50 wt.-%, relative to the total weight of the photoinitiator package, of the one or more optical brightener sensitizers; and
c) an amount in the range from 1.0 to 45 wt.-%, relative to the total weight of the photoinitiator package, of one or more amines.

In another embodiment, the photoinitiator package comprises, more preferably consists of:
a) an amount in the range from 60 to 96.0 wt.-%, relative to the total weight of the photoinitiator package, of the one or more bisacylphosphine oxide photoinitiators having a structure according to formula (I);
b) an amount in the range from 1.0 to 37 wt.-%, relative to the total weight of the photoinitiator package, of the one or more optical brightener sensitizers; and
c) an amount in the range from 3.0 to 35 wt.-%, relative to the total weight of the photoinitiator package, of one or more amines.

In yet a further embodiment, the photoinitiator package comprises, more preferably consists of:
a) an amount in the range from 65 to 92.0 wt.-%, relative to the total weight of the photoinitiator package, of the one or more bisacylphosphine oxide photoinitiators having a structure according to formula (I);
b) an amount in the range from 3.0 to 30 wt.-%, relative to the total weight of the photoinitiator package, of the one or more optical brightener sensitizers; and
c) an amount in the range from 5.0 to 30 wt.-%, relative to the total weight of the photoinitiator package, of one or more amines.

When no amine is present, the photoinitiator package preferably comprises, more preferably consists of:
a) an amount in the range from 50 to 99.9 wt.-%, more preferably in the range from 70 to 99.0 wt.-%, most preferably in the range from 80 to 97.0 wt.-%, relative to the total weight of the photoinitiator package, of the one or more bisacylphosphine oxide photoinitiators having a structure according to formula (I); and
b) an amount in the range from 0.1 to 50 wt.-%, more preferably in the range from 1.0 to 30 wt.-%, most preferably in the range from 3.0 to 20 wt.-%, relative to the total weight of the photoinitiator package, of the one or more optical brightener sensitizers.

In another embodiment, the photoinitiator package comprises, more preferably consists of:
a) an amount in the range from 50 to 99.9 wt.-%, relative to the total weight of the photoinitiator package, of the one or more bisacylphosphine oxide photoinitiators having a structure according to formula (I); and
b) an amount in the range from 0.1 to 50 wt.-%, relative to the total weight of the photoinitiator package, of the one or more optical brightener sensitizers.

In a further embodiment, the photoinitiator package comprises, more preferably consists of:
a) an amount in the range from 70 to 99.0 wt.-%, relative to the total weight of the photoinitiator package, of the one or more bisacylphosphine oxide photoinitiators having a structure according to formula (I); and
b) an amount in the range from 1.0 to 30 wt.-%, relative to the total weight of the photoinitiator package, of the one or more optical brightener sensitizers.

In a final embodiment, the photoinitiator package comprises, more preferably consists of:
a) an amount in the range from 80 to 97.0 wt.-%, relative to the total weight of the photoinitiator package, of the one or more bisacylphosphine oxide photoinitiators having a structure according to formula (I); and
b) an amount in the range from 3.0 to 20 wt.-%, relative to the total weight of the photoinitiator package, of the one or more optical brightener sensitizers.

If further components other than the one or more bisacylphosphine oxide photoinitiators having a structure according to formula (I), the one or more optical brightener sensitizers and the one or more amines are present, then they must be further Type-I or Type-II photoinitiators.

Furthermore, it is preferred that the photoinitiator package is present in the form of a blend that is liquid at 25 °C and standard pressure.

This means that the one or more bisacylphosphine oxides, the one or more optical brightener sensitizers and the optional one or more amines must be miscible and form a stable liquid blend at the indicated temperature and pressure, rather than being present as a mixture of dry powders, for example.

### Photopolymerizable composition

In a second aspect, the present invention is also directed to a photopolymerizable composition.

In the broadest sense, the photopolymerizable composition comprises or consist of:
a) one or more ethylenically unsaturated, free-radical polymerizable compounds;
b) the photoinitiator package according to the first aspect.

It is preferred that the photopolymerizable composition comprises or consists of:
a) an amount in the range from 30 to 99.0 wt.-%, more preferably in the range from 50 to 95.0 wt.-%, most preferably in the range from 70 to 90 wt.-%, relative to the total weight of the photopolymerizable composition, of the one or more ethylenically unsaturated, free-radical polymerizable compounds;
b) an amount in the range from 0.5 to 50 wt.-%, more preferably in the range from 0.8 to 40 wt.-%, most preferably in the range from 1.0 to 30 wt.-%, relative to the total weight of the photopolymerizable composition, of the photoinitiator package according to the first aspect.

In addition to the one or more ethylenically unsaturated, free-radical polymerizable compounds and photoinitiator package according to the first aspect, the photopolymerizable composition may comprise further components, as would be well-understood by the person skilled in the art.

Suitable further components include photosensitizers, further photoinitiators, pigments, binders, and conventional additives.

As such, the photopolymerizable composition comprises, more preferably consists of:
a) an amount in the range from 30 to 99.0 wt.-%, more preferably in the range from 50 to 95.0 wt.-%, most preferably in the range from 70 to 90 wt.-%, relative to the total weight of the photopolymerizable composition, of the one or more ethylenically unsaturated, free-radical polymerizable compounds;
b) an amount in the range from 0.5 to 50 wt.-%, more preferably in the range from 0.8 to 40 wt.-%, most preferably in the range from 1.0 to 30 wt.-%, relative to the total weight of the photopolymerizable composition, of the photoinitiator package according to the first aspect;
c) optionally, an amount in the range from 0.1 to 30 wt.-%, more preferably in the range from 1.0 to 25 wt.-%, most preferably in the range from 10 to 20 wt.-%, relative to the total weight of the photopolymerizable composition, of one or more pigments;
d) optionally, an amount in the range from 5.0 to 60 wt.-%, more preferably in the range from 8.0 to 50 wt.-%, most preferably in the range from 10 to 40 wt.-%, relative to the total weight of the photopolymerizable composition, of one or more binders; and
e) optionally, an amount in the range from 0.01 to 10 wt.-%, more preferably in the range from 0.01 to 8.0 wt.-%, most preferably in the range from 0.01 to 5.0 wt.-%, relative to the total weight of the photopolymerizable composition, of one or more additives.

In addition, the photopolymerizable composition may be formulated in compositions further comprising water and/or solvents, such as organic solvents.

The choice of the one or more ethylenically unsaturated, free-radical polymerizable compounds is not particularly limited. Said compounds can contain one or more olefinic double bonds. They can be low-molecular weight (monomeric) or high-molecular weight (oligomeric) compounds.

Examples of suitable low molecular weight polymerizable compounds (monomeric compounds) having one double bond are alkyl or hydroxyalkyl acrylates or methacrylates, such as methyl-, ethyl-, butyl-, 2-ethylhexyl-,2-hydroxyethyl- or isobornyl-acrylate; and methyl or ethyl methacrylate. Further examples 5 are resins modified with silicon or fluorine, e.g. silicone acrylates. Further examples of these polymerizable compounds are acrylonitrile, acrylamide, methacrylamide, N-substituted (meth)acrylamides, styrene, alkylstyrenes and halogeno styrenes, vinyl esters such as vinyl acetate, vinyl ethers such as iso-butyl vinyl ether, N-vinylpyrrolidone, vinyl chloride or vinylidene chloride.

Examples of polymerizable compounds having more than one double bond are the ethylene glycol diacrylate, propylene glycol diacrylate, neopentyl glycol diacrylate, hexamethylene glycol diacrylate, bisphenol A diacrylate, 4,4'-bis-(2-acryloyloxyethoxy)-diphenylpropane, trimethylolpropane triacrylate, pentaerythritol triacrylate or tetraacrylate, vinyl acrylate, divinyl benzene, divinyl succinate, diallyl phthalate, triallyl phosphate, triallyl isocyanurate or tris-(2-acryloylethyl) isocyanurate.

Examples of high-molecular weight (oligomeric) polyunsaturated compounds are acrylated epoxy resins, acrylated or vinyl-ether- or epoxy-group-containing polyesters, acrylated polyurethanes or acrylated polyethers.

Further examples of unsaturated oligomers are unsaturated polyester resins which are usually prepared from maleic acid, phthalic acid and one or more diols and which have molecular weights of from about 500 Da to 3,000 Da. Such unsaturated oligomers can also be referred to as prepolymers.

Examples of polymerizable compounds which are particularly suitable for the implementation of the present invention, are esters of ethylenically unsaturated carboxylic acids and polyols or polyepoxides, and polymers containing ethylenically unsaturated groups in the chain or in side groups, e.g. unsaturated polyesters, polyamides and polyurethanes and copolymers thereof, alkyl resins, polybutadiene and butadiene copolymers, polyisoprene and isoprene copolymers, polymers and copolymers having (meth)acrylic groups in side chains, as well as mixtures thereof.

Illustrative examples of unsaturated carboxylic acids or anhydrides, useful for the preparation of the above esters, are acrylic acid, methacrylic acid, maleic anhydride, crotonic acid, itaconic acid, cinnamic acid and unsaturated fatty acids such as linolenic acid and oleic acid. Acrylic and methacrylic acid are preferred.

Examples of polyols, which can also be esterified, are aromatic and aliphatic and cycloaliphatic polyols, preferably aliphatic and cycloaliphatic polyols. Aromatic polyols are, for example, hydroquinone, 4,4'-dihydroxydiphenyl, 2,2-di(4-hydroxyphenyl) propane, as well as novolaks and resoles.

Polyepoxides, which can be esterified, include those based on the said polyols, especially the reaction products between aromatic polyols and epichlorohydrin. Also suitable as polyols are polymers and copolymers that contain hydroxyl groups in the polymer chain or in side groups, for example polyvinyl alcohol and copolymers thereof or polymethacrylic acid hydroxyalkyl esters or copolymers thereof. Further suitable polyols are oligoesters carrying hydroxyl terminal groups.

Examples of aliphatic and cycloaliphatic polyols include alkylenediols containing preferably from 2 to 12 carbon atoms, such as ethylene glycol, 1,2- or 1,3-propanediol, 1,2-, 1,3- or 1,4-butanediol, pentanediol, hexanediol, octanediol, dodecanediol, diethylene glycol, triethylene glycol, polyethylene glycols having molecular weights of preferably from 200 Da to 1,500 Da, 1,3-cyclopentanediol, 1,2-, 1,3- or 1,4-cyclohexanediol, 1,4-dihydroxymethyl cyclohexane, glycerol, tris(β-hydroxy-ethyl)amine, trimethylolethane, trimethylolpropane, pentaerythritol, dipentaerythritol and sorbitol.

Further suitable ethylenically unsaturated compounds are unsaturated polyamides obtained from unsaturated carboxylic acids and aromatic, aliphatic and cycloaliphatic polyamines having preferably from 2 to 6, preferably from 2 to 4, amino groups. Examples of such polyamines are: ethylenediamine, 1,2- or 1,3-propylenediamine, 1,2-, 1,3- or 1,4-butylenediamine, 1,5-pentylenediamine, 1,6-hexylenediamine, octylenediamine, dodecylene diamine, 1,4-diaminocyclohexane, isophoronediamine, phenylene diamine, bisphenylenediamine, di-( β -aminoethyl) ether, diethylene triamine, triethylenetetramine and di(β -aminoethoxy)- and di(β -aminopropoxy)ethane. Other suitable polyamines are polymers and copolymers which may contain additional amino groups in the side chain and oligoamides containing amino end groups.

Specific examples of such unsaturated polyamides are methylenebisacrylamide, 1,6-hexamethylene bisacrylamide, diethylenetriamine trismethacrylamide, bis(methacrylamidopropoxy) ethane and N-[( β -hydroxyethoxy)ethyl]-acrylamide.

Unsaturated polyurethanes are also suitable for the implementation of the present invention as polymerizable compounds, for example those derived from saturated or unsaturated diisocyanates and unsaturated or saturated diols.

Polybutadiene and polyisoprene and copolymers thereof may also be used.

Suitable polymerizable compounds include, for example, olefins, such as ethylene, propene, butene and hexene, (meth)acrylates, acrylonitrile, styrene and vinyl chloride. Polymers having unsaturated (meth)acrylate groups in the side chain can also be used as the one or more ethylenically unsaturated, free-radical polymerizable compounds. They may typically be reaction products of epoxy resins based on novolac with (meth)acrylic acid; homo- or copolymers of vinyl alcohol or hydroxyalkyl derivatives thereof that have been esterified with (meth)acrylic acid; and homo- and co-polymers of (meth)acrylates that have been esterified with hydroxyalkyl (meth)acrylates.

Examples of photosensitizers are those commonly used in the art, aromatic carbonyl compounds, e.g. benzophenones, thioxanthones, anthraquinones, and 3-acylcoumarin derivatives, terphenyls, styryl ketones, and 3- (aroylmethylene)-thiazolines, camphorquinones and also eosin, rhodamine and erythrosine dyes.

Examples of thioxanthones are thioxanthone, 2-isopropyl thioxanthone, 2-chloro thioxanthone, 2-dodecyl thioxanthone, 2,4-diethyl thioxanthone, 2,4-dimethyl thioxanthone, 1-methoxycarbonyl thioxanthone, 2-ethoxycarbonyl thioxanthone, 3-(2-methoxyethoxycarbonyl) thioxanthone, 4-butoxycarbonyl thioxanthone, 3-butoxycarbonyl-7-methyl thioxanthone, 1-cyano-3-chloro thioxanthone, 1-ethoxycarbonyl-3-chloro thioxanthone, 1-ethoxycarbonyl-3-ethoxy thioxanthone, 1-ethoxycarbonyl-3-amino thioxanthone, 1-ethoxycarbonyl-3-phenylsulfuryl thioxanthone, 3,4-di[2-(2-methoxyethoxy)ethoxycarbonyl] thioxanthone, 1-ethoxycarbonyl-3-(1-methyl-1-morpholinoethyl) thioxanthone, 2-methyl-6-dimethoxymethyl thioxanthone, 2-methyl-6-(1,1-dimethoxybenzyl) thioxanthone, 2-morpholinomethyl thioxanthone, 2-methyl-6-morpholinomethyl thioxanthone, N-allylthioxanthone-3,4-dicarboximide, N-octylthioxanthone-3,4-dicarboximide, N-(1,1,3,3-tetramethylbutyl)-thioxanthone-3,4-dicarboximide, 1-phenoxy thioxanthone, 6-ethoxycarbonyl-1-2-methoxythioxanthone, 6-ethoxycarbonyl-2-methylthioxanthone, thioxanthone-2-polyethylene glycol ester, 2-hydroxy-3-(3,4-dimethyl-9-oxo-9H-thioxanthon-2-yloxy)-N,N,N-trimethyl-1-propanaminium chloride, or those described in the patent application PCT/EP2011/069514, such as n-dodecyl-7-methyl-thioxanthone-3-carboxylate and N,N-disobutyl-7-methyl-thioxanthone-3-carbamide. Also suitable are polymeric thioxanthone derivatives (e.g. Omnipol^{®} TX from IGM Resins B.V., Genopol^{®} TX-1 from Rahn A.G., Speedcure^{®} 7010 from Lambson Limited).

Example of benzophenones are benzophenone, 4-phenyl benzophenone, 4-methoxy benzophenone, 4,4'-dimethoxybenzophenone, 4,4'-dimethyl benzophenone, 4,4'-dichloro benzophenone, 4,4'-dimethylamino benzophenone, 4,4'-diethylamino benzophenone, 4-methyl benzophenone, 2,4,6-trimethyl benzophenone, 4-(4-methylthiophenyl) benzophenone, 3,3'-dimethyl-4-methoxy benzophenone, methyl 2-benzoyl benzoate, 4-(2-hydroxyethylthio) benzophenone, 4-(4-tolylthio) benzophenone, 4-benzoyl-N,N,N-trimethylbenzene methanaminium chloride, 2-hydroxy-3-(4-benzoylphenoxy)-N,N,N-trimethyl-1-propanaminium chloride monohydrate, 4-(13-acryloyl-1,4,7,10,13-pentaoxatridecyl) benzophenone, 4-benzoyl-N,N-dimethyl-N-[2-(1-oxo-2-propenyl)oxylethyl-benzene methanaminium chloride, or those described in US9938231 (e.g. Omnirad^{®} 991 from IGM Resins B.V.).

Also suitable are polymeric benzophenone derivatives (e.g. Omnipol^{®} BP, Omnipol^{®} 2702 and Omnipol^{®} 682 all from IGM Resins B.V., Genopol^{®} BP-2 from Rahn A.G. and Speedcure^{®} 7005 from Lambson Limited).

Examples of 3-acylcoumarin derivatives are 3-benzoyl coumarin, 3-benzoyl-7-methoxy coumarin, 3-benzoyl-5,7-di(propoxy) coumarin, 3-benzoyl-6,8-dichloro coumarin, 3-benzoyl-6-chloro coumarin, 3,3'-carbonyl-bis[5,7-di(propoxy) coumarin], 3,3'-carbonyl-bis(7-methoxy coumarin), 3,3'-carbonyl-bis(7-diethylamino coumarin), 3-isobutyroyl coumarin, 3-benzoyl-5,7-dimethoxy coumarin, 3-benzoyl-5,7-diethoxy coumarin, 3-benzoyl-5,7-dibutoxy coumarin, 3-benzoyl-5,7-di(methoxyethoxy) coumarin, 3-benzoyl-5,7-di(allyloxy) coumarin, 3-benzoyl-7-dimethylamino coumarin, 3-benzoyl-7-diethylamino coumarin, 3-isobutyroyl-1,7-dimethylamino coumarin, 5,7-dimethoxy-3-(1-naphthoyl) coumarin, 5,7-dimethoxy-3(1-naphthoyl)-coumarin, 3-benzoylbenzo [f]coumarin, 7-diethylamino-3-thienoyl coumarin, 3-(4-cyanobenzoyl)-5,7-dimethoxy coumarin, or those described in EP2909243 and WO2017216699.

Examples of 3-(aroylmethylene) thiazolines are 3-methy-1,2-benzoylmethylene-(3-naphtho thiazoline, 3-methyl-2-benzoylmethylene-benzo thiazoline, 3-ethyl-2-propionylmethylene- β -naphtho thiazoline.

Examples of other aromatic carbonyl compounds are acetophenone, 3-methoxyacetophenone, 4-phenylacetophenone, benzil, such as that described in WO 2013/164394, 2-acetylnaphthalene, 2-naphthaldehyde, 9,10-anthraquinone, 9-fluorenone, dibenzosuberone, xanthone, 2,5-bis(4-diethylaminobenzylidene) cyclopentanone, α-(para-dimethylamino benzylidene), ketones, such as 2-(4-dimethylamino-benzylidene)-indan-1-one or 3-(4-dimethylaminophenyl)-1-indan-5-yl-propenone, 3-phenylthiophthalimide, N-methyl-3,5-di(ethylthio) phthalimide.

Particularly preferred are thioxanthones, and 3-acylcoumarins.

It was observed that the above photosensitizers increase the activity of the one or more bisacylphosphine oxide photoinitiators without shortening the shelf life of the compositions. Moreover, such compositions have the special advantage that an appropriate choice of the photosensitizer allows the spectral sensitivity of the photoinitiator package to be shifted to any desired wavelength region. The skilled in the art is able to select the suitable photosensitizer to make the photoinitiator package work at any desired wavelength region.

Examples of other suitable photoinitiators are camphorquinone, benzophenone, benzophenone derivatives, acetophenone, acetophenone derivatives, dialkoxyacetophenones, α-hydroxyketones, α-aminoketones, 4-aroyl-1,3-dioxolanes, benzoin alkyl ethers and benzil ketals, e.g. benzil dimethyl ketal, ketosulfones, e.g 1-[4-[(4-benzoyl-phenyl)-thio]-phenyl]-2-methyl-2-[(4-methyl-phenyl)-sulfonyl]-propan-1-one (Esacure^{®} 1001, from IGM Resins B.V.), 3-ketocoumarins, for example as described in EP2909243 and WO2017216699, phenylglyoxylates and derivatives thereof, dimeric phenyl glyoxylates, peresters, e.g. benzophenonetetracarboxylic acid peresters, for example as described in EP 126 541, acylphosphine photoinitiators (which can be chosen among mono-acylphosphine oxides, bis-acylphosphine oxides, tris-acylphosphine oxides and multifunctional mono-or bisacylphosphine oxides), halomethyltriazines, hexaaryl bisimidazole/coinitiator systems, e.g. ortho-chlorohexaphenylbisimidazole in combination with 2-mercaptobenzothiazole, ferrocenium compounds or titanocenes, for example dicyclopentadienyl-bis(2,6-difluoro-3-pyrrolo-phenyl)titanium, O-acyloxime ester photoinitiators.

Examples of α-hydroxyketones and α-aminoketones are 1-hydroxy cyclohexylphenyl ketone, 2-hydroxy-2-methyl-1-phenyl-propane-1-one, 1-[4-(2-hydroxyethoxy)phenyl]-2-hydroxy-2-methyl-1-propane-1-one, 2-hydroxy-1-{4-[4-(2-hydroxy-2-methyl-propionyl)-benzyl]phenyl}-2-ethyl-propane-1-one), 2-hydroxy-1-{4-[4-(2-hydroxy-2-methyl-propionyl)-phenoxy]-phenyl}-2-methyl-propan-1-one, 2-methyl-1-(4-methylthiophenyl)-2-morpholinopropane-1-one), 2-benzyl-2-dimethylamino-1-(4-morpholinophenyl)-butane-1-one, and (2-(dimethylamino)-2-[(4-methylphenyl)methyl]-1-[4-(4-morpholinyl) phenyl]-1-butanone).

Examples of O-acyloxime ester photoinitiators are 1,2-octanedione, 1-[4-(phenylthio)phenyl]-2-(O-benzoyloxime), ethanone 1-[9-ethyl-6-(2-methylbenzoyl)-9H-carbazole-3-yl] 1-(O-acetyloxime) or those described in GB 2339571.

Examples of acylphosphine photoinitiators include, but are not limited to, bis(2,4,6-trimethylbenzoyl)phenylphosphine oxide, bis(2,6-dimethoxybenzoyl)-2,4,4-trimethylpentyl phosphine oxide, bis(2,4,6-trimethylbenzoyl)-(2,4-dipentyloxyphenyl), 2,4,6-trimethylbenzoyl-diphenyl phosphine oxide and ethyl (2,4,6-trimethylbenzoyl) phenylphosphinate, Phenyl(2,4,6-trimethylbenzoyl)phosphinic acid, glycerol ethoxylated trimester (Omnipol^{®} TP from IGM Resins B.V.).

Examples of the halomethyltriazines based photoinitiators are 2-[2-(4-methoxy-phenyl)-vinyl]-4,6-bistrichloromethyl [1,3,5]triazine, 2-(4-methoxy-phenyl)-4,6-bis-trichloromethyl [1,3,5]triazine, 2-(3,4-dimethoxyphenyl)-4,6-bis-trichloromethyl [1,3,5]triazine, 2-methyl-4,6-bis-trichloromethyl [1,3,5] triazine.

Cationic photoinitiators can be also used as the further photoinitiators, when the photopolymerizable compositions according to the invention are used in hybrid systems (which in this connection mean mixtures of free- radically and cationically curing systems). Examples of suitable cationic photoinitiators are aromatic sulfonium, phosphonium or iodonium salts, as described e.g. in US 4,950,581, or cyclopentadienylarene-iron(II) complex salts, e.g. (η⁶-isopropylbenzene)(η⁵-cyclopentadienyl) iron(II) hexafluorophosphate or photolatent acids based on oximes, as described, for example, in GB 2 348 644, US4,450,598, US4,136,055, WO 00/10972 and WO 00/26219.

Any pigment known to the person skilled in the art may be used in the photopolymerizable composition.

Depending upon the intended use, both inorganic and organic pigments may be used. Such additives are well known to the person skilled in the art; some examples are carbon black, iron oxides, such as iron oxide yellow, iron oxide red, chromium yellow, chromium green, nickel titanium yellow, ultramarine blue, cobalt blue, bismuth vanadate, cadmium yellow and cadmium red. Examples of organic pigments are mono- or bis-azo pigments, and also metal complexes thereof, phthalocyanine pigments, polycyclic pigments, e.g. perylene, anthraquinone, thioindigo, quinacridone or triphenylmethane pigments, and also diketo-pyrrolo-pyrrole, isoindolinone, e.g. tetrachloroisoindolinone, isoindoline, dioxazine, benzimidazolone and quinophthalone pigments. The pigments may be used in the formulations individually or in admixture

The addition of binders is particularly advantageous when the ethylenically unsaturated, free-radical polymerizable compound(s) are liquid or viscous substances. The choice of binder is made in accordance with the field of use and the properties required therefor, such as developability in aqueous and organic solvent systems, adhesion to substrates and sensitivity to oxygen. Suitable binders are, for example, polymers having a weight average molecular weight (Mw) of approximately from 5,000 Da to 2,000,000 Da, preferably from 10,000 Da to 1,000,000 Da. Illustrative examples are: homo- and copolymers of acrylates and methacrylates, e.g. copolymers of methyl methacrylate/ethyl acrylate/methacrylic acid, poly(methacrylic acid alkyl esters), poly(acrylic acid alkyl esters); cellulose esters and ethers, such as cellulose acetate, cellulose acetate butyrate, methylcellulose, ethylcellulose, polyvinylbutyral, polyvinylformal, cyclised rubber, polyethers such as polyethylene oxide, polypropylene oxide, polytetrahydrofuran, polystyrene, polycarbonates, polyurethanes, chlorinated polyolefins, e.g. polyvinyl chloride, co-polymers of vinyl chloride/vinylidene chloride, co-polymers of vinylidene chloride with acrylonitrile, methyl methacrylate and vinyl acetate, polyvinyl acetate, co-poly (ethylene/vinyl acetate), polymers such as polycaprolactam and poly(hexamethylene adipamide), polyesters such as poly(ethylene glycol terephthalate) and poly(hexamethylene glycol succinate).

Suitable examples of co-initiators (also known as accelerators) are alcohols, thiols, thioethers, amines or ethers that have an available hydrogen, bonded to a carbon adjacent to the heteroatom, disulfides and phosphines, e.g. as described in EP 438 123 and GB 2 180 358. Suitable examples of amine accelerators/co-initiators include, but are not limited to, aliphatic, cycloaliphatic, aromatic, arylaliphatic, heterocyclic, oligomeric or polymeric amines. They can be primary, secondary or tertiary amines, for example butyl amine, dibutyl amine, tributyl amine, cyclohexyl amine, benzyldimethyl amine, di-cyclohexyl amine, N-phenyl glycine, triethyl amine, phenyl-diethanol amine, triethanolamine, piperidine, piperazine, morpholine, pyridine, quinoline, esters of dimethylamino benzoic acid, Michler's ketone (4,4'-bis-dimethyl aminobenzophenone) and derivatives thereof. As the amine accelerators/co-initiators, an amine-modified acrylate compound can be used; examples of such amine-modified acrylate include acrylates modified by reaction with a primary or secondary amine that are described in US 3,844,916, EP 280222, US 5,482,649 or US 5,734,002. Multifunctional amine and polymeric amine derivatives are also suitable as co-initiators some examples are Omnipol^{®} ASA from IGM Resins B.V., Genopol^{®} AB-2 from Rahn A.G., Speedcure^{®} 7040 from Lambson Limited or those described in US2013/0012611

The choice of additives is governed by the field of use in question and the properties desired for that field. Typical additives include thermal initiators, stabilizers, light stabilizers, fillers, colorants, antistatic agents, wetting agents, flow improvers, and adhesion enhancers.

For instance, especially in the case of pigmented compositions, the composition may also comprise, as additional additive, a thermal initiator, a compound that forms free radicals when heated, e.g. an azo compounds, such as 2,2'-azobis(4-methoxy-2,4-dimethylvaleronitrile), a triazene, diazo sulfide, pentazadiene or a peroxy compound, for example a hydroperoxide or peroxycarbonate, e.g. tert-butyl hydroperoxide, as described e.g. in EP 245 639.

Suitable stabilizers are, for example, thermal inhibitors, such as hydroquinone, hydroquinone derivatives, p-methoxyphenol, β-naphthol or sterically hindered phenols, e.g. 2,6-di(tert-butyl)-p-cresol, which prevent premature polymerization. In order to increase dark storage stability it is possible to use, for example, copper compounds, such as copper naphthenate, stearate or octoate, phosphorus compounds, for example triphenylphosphine, tributylphosphine, triethyl phosphite, triphenyl phosphite or tribenzyl phosphite, quaternary ammonium compounds, e.g. tetramethylammonium chloride or trimethylbenzylammonium chloride, or hydroxylamine derivatives, e.g. N,N-diethylhydroxylamine. For the purpose of excluding atmospheric oxygen during polymerization it is possible to add paraffin or similar wax-like substances which, being insoluble in the polymer, migrate to the surface at the beginning of the polymerization and form a transparent surface layer which prevents air from entering.

It is also possible to add a light stabilizer, such as UV absorbers, e.g. hydroxyphenylbenzotriazole, hydroxyphenylbenzophenone, oxalic acid amide or hydroxyphenyl-s-triazine type. Such components can be used on their own or in the form of mixtures, with or without the use of sterically hindered amines (HALS).

All fallback positions and preferable embodiments of the photoinitiator package described above or below are applicable mutatis mutandis to the photopolymerizable composition according to the present aspect.

### Method

In a third aspect, the present invention is directed to a method for photocuring photopolymerizable compositions, coatings, adhesives and inks, said method comprising the following steps in the given order:
a) coating or printing the photopolymerizable composition according to the second aspect onto a substrate, and
b) photopolymerizing said coated or printed composition with a light source on said substrate.

Preferably the light source operates in the near-UV or visible range of the EM-spectrum.

All fallback positions and preferable embodiments of the photoinitiator package and the photopolymerizable composition described above or below are applicable mutatis mutandis to the method for photocuring photopolymerizable compositions, coatings, adhesives and inks according to the present aspect.

### Use

In a final aspect, the present invention is directed to a use of the photoinitiator package according to the first aspect in the production of printing inks, screen-printing inks, gravure printing inks, solder masks, etch offset-printing inks, flexographic- printing inks, gravure printing inks, ink jet inks, resist material, insulators, encapsulants, image-recording material, solder mask, passivation layer, protective coating, 3D-printing objects and molds, holographic applications, optical fiber coating, waveguide and lens, overprint varnish, wood, vinyl, metal and plastic coatings.

All fallback positions and preferable embodiments of the photoinitiator package described above or below are applicable mutatis mutandis to the use according to the present aspect.

### EXAMPLES

### A. Determination methods

**Tack-free measurement:** Tack-free refers to a coating condition whereby a coating is completely cured on surface. It is evaluated as follows: the formulation is spread with a thickness of 12 microns on a varnished cardboard using a bar-coater and photopolymerized under a light source. Then the thumb of the operator is brought into contact with the coating with a slightly pressure, if no fingerprints/signs remain on the surface the coating is perfectly cured. The maximum speed (m/min) at which no fingerprints/signs remain on the surface is given as value of tack-free. Higher maximum speeds correspond to higher reactivity.

### B. Experimental

### 1. Materials used

The following commercially available compounds were used in the preparation of the reference, inventive and comparative formulations:
- PI-I:: bis(2,4,6-trimethylbenzoyl) octylphosphine oxide, prepared as in US 5534559 A.
- PI-C1:: diphenyl(2,4,6-trimethylbenzoyl)phosphine oxide, CAS #: 75980-60-8, commercially available as Omnirad TPO from IGM Group B. V. (NL).
- PI-C2:: bis(2,6-dimethoxybenzoyl)-2,4,4-trimethylpentylphosphine oxide, CAS #: 145052-34-2, commercially available as Omnirad 403 from IGM Group B. V. (NL).
- PI-C3:: bis(2,4,6-trimethylbenzoyl) phenylphosphine oxide, CAS #: 162881-26-7, commercially available as Omnirad 819 from IGM Group B. V. (NL).
- S1:: 7-diethylamino-4-methylcoumarin, CAS #: 91-44-1, commercially available as Coumarin 1 from Merck KGaA (DE).
- S2:: 2,5-thiophenediylbis(5-tert-butyl-1,3-benzoxazole), CAS #: 7128-64-5, commercially available as Omnistab OB from IGM Group B. V. (NL).
- A:: 1H-azepine-1-propanoic acid, hexahydro-2,2-bis[[(1-oxo-2-propen-1-yl)oxy]methyl]butyl ester, commercially available as Photomer 4250 from IGM Group B. V. (NL).
- M:: a 40:30:30 photopolymerizable monomer blend of M1, M2 and M3.
- M1:: bisphenol Y epoxy diacrylate, CAS #: 55818-57-0, commercially available as Photomer 3016 from IGM Group B. V. (NL).
- M2: glyceryl [4 PO] triacrylate, CAS #: 52408-84-1, commercially available as Photomer 4094 from IGM Group B. V. (NL).
- M3: Trimethylolpropane triacrylate, CAS #: 15625-89-5, commercially available as Photomer 4006 from IGM Group B. V. (NL).

### 2. Formulations (photopolymerizable compositions)

The following reference, inventive and comparative formulations were used in the surface curing evaluation, wherein the amounts of each component are given in percentage by weight (wt.-%). The formulations were prepared by adding to the photopolymerizable monomer blend M, the photoinitiator, the sensitizer and the amine at the concentration indicated in Table 1 at room temperature. The formulations were stirred at 60 °C for 2 hours and after cooling at room temperature were spread with a thickness of 12 microns on a varnished cardboard using a bar-coater. Thereafter, the formulations were photopolymerized using a light source (Table 2):

**Table 1: Recipes of reference, inventive and comparative formulations**

| | **RE1** | **CE1** | **CE2** | **RE2** | **CE3** | **CE4** | **RE3** | **CE5** | **CE6** | **RE4** | **IE1** | **IE2** | **IE3** | **IE4** |
|---|---|---|---|---|---|---|---|---|---|---|---|---|---|---|
| PI-I | - | - | - | - | - | - | - | - | - | 10 | 10 | 10 | 10 | 10 |
| PI-C2 | 10 | 10 | 10 | - | - | - | - | - | - | - | - | - | - | - |
| PI-C3 | - | - | - | 10 | 10 | 10 | - | - | - | - | - | - | - | - |
| PI-C4 | - | - | - | - | - | - | 10 | 10 | 10 | - | - | - | - | - |
| S1 | - | 10 | - | - | 10 | - | - | 10 | - | - | 10 | - | 10 | - |
| S2 | - | - | 10 | - | - | 10 | - | - | 10 | - | - | 10 | - | 10 |
| A | - | - | - | - | - | - | - | - | - | - | - | - | 5 | 5 |
| M | 90 | 80 | 80 | 90 | 80 | 80 | 90 | 80 | 80 | 90 | 80 | 80 | 75 | 75 |

### 3. Surface photocuring evaluation

The reference, inventive and comparative formulations were evaluated for their surface photocuring ability, according to the testing method provided in the determination method, using different light sources (with the values in Table 2 corresponding to the maximum Tack-free speed in m/min):

**Table 2: Performance of the formulations in surface photocuring**

| | **Lamp 1** | **Lamp 2** | **Lamp 3** | **Lamp 4** | **Lamp 5** |
|---|---|---|---|---|---|
| **RE1** | 47 | 11 | <10 | <10 | 11 |
| **CE1** | 52 | n/m | 26 | 24 | <10 |
| **CE2** | 68 | n/m | 31 | 33 | 41 |
| **RE2** | 49 | 12 | <10 | <10 | <10 |
| **CE3** | 57 | n/m | 34 | 35 | <10 |
| **CE4** | 56 | n/m | 35 | 34 | 44 |
| **RE3** | 57 | 27 | 12 | 11 | 16 |
| **CE5** | 66 | n/m | 58 | 38 | <10 |
| **CE6** | >100 | n/m | 56 | 44 | 39 |
| **RE4** | 46 | 12 | <10 | <10 | <10 |
| **IE1** | 96 | n/m | 67 | 46 | <10 |
| **IE2** | >100 | n/m | 71 | 50 | 52 |
| **IE3** | >100 | 83 | 78 | 56 | 13 |
| **IE4** | >100 | 85 | 77 | 57 | 62 |

| | | | | | |
|---|---|---|---|---|---|
| * n/m = not measured | | | | | |

- Lamp 1:: a UV Hg lamp with an intensity of 120 W/cm, at a distance of 8 cm.
- Lamp 2:: a UV Hg lamp with an intensity of 85 W/cm, at a distance of 8 cm.
- Lamp 3:: a UV LED lamp with a wavelength of 395 nm and an intensity of 4 W/cm², at a distance of 0.5 cm.
- Lamp 4:: a UV LED lamp with a wavelength of 365 nm and an intensity of 4 W/cm², at a distance of 0.5 cm.
- Lamp 5:: a UV LED lamp with a wavelength of 278 nm and an intensity of 4 W/cm², at a distance of 0.5 cm.

As can be seen from the data in Table 2, the sensitizers S1 and S2 increased the rate of surface curing for almost all combinations; however, whilst the inventive photoinitiator (PI-I) was generally similar or inferior to the comparative photoinitiators in the absence of a sensitizer (i.e. RE4 vs. RE1-RE3), the combination of the inventive photoinitiator with sensitizers S1 and S2 provided inventive formulations (IE1 and IE2) having much higher activity (as seen by improved cure rate) than identical formulations having comparative photoinitiators.

When using Lamp 1, the inventive compositions (IE1 and IE2) had a cure rate of more than twice the reference example (RE4), whereas the comparative compositions generally had more modest improvements, generally ranging from 10 to 44% (CE1 to CE5) improvements relative to the original cure rates (RE1 to RE3). In general, the activity of the inventive compositions exceeded the limits of the test, so the improvements may even be higher.

Indeed, for Lamps 2 to 5, wherein the initial activities were generally much lower for RE1 to RE4, the effect of the inventive combinations is even clearer, with drastic improvements of 5 to 8 fold improvements in the reactivities. In contrast, the comparative combinations improve by a much less significant margin, e.g. <10 to 71 for RE4 to IE2 (Lamp 3), versus <10 to 31 for RE1 to CE2, <10 to 35 for RE2 to CE4, and 12 to 56 for RE3 to CE6.

It must be noted that the benzoxazole sensitizer S2 was particularly effective for Lamp 5, which showed poor reactivity for all other combinations.

IE3 and IE4 demonstrate that the inventive combination of PI-I with S1 or S2 may be improved further by the addition of an amine additive, which even better surface cures observed in all cases (IE3/IE4 vs IE1/IE2 respectively).

### 4. Photoinitiator package in the form of liquid blend

The photopolymerizable package of the invention can be also prepared in the form of liquid blend. In a 3-necked round-bottomed flask was charged under stirring the photoinitiator and the temperature was slowly increased to 60 °C. Then, the sensitizer and the amine (if present - see Table 3) were added, and the solution stirred for another 1 hour at 80 °C. Then, the clear solution is slowly cooled at room temperature to yield the liquid blend, which may be used directly for preparing a polymerizable composition.

**Table 3: Recipes for photoinitiator packages**

| | **CE7** | **CE8** | **CE9** | **IE5** | **IE6** |
|---|---|---|---|---|---|
| PI-I | - | - | - | 50 | 40 |
| PI-C2 | 50 | - | - | - | - |
| PI-C3 | - | 50 | - | - | - |
| PI-C4 | - | - | 50 | - | - |
| S1 | 50 | 50 | 50 | 50 | 40 |
| A | - | - | - | - | 20 |
| Physical state at 25°C | solid | solid | solid | Liquid (no reprecipitation) | Liquid (no reprecipitation) |

As can be seen from Table 3, the inventive photoinitiator packages are present in a liquid form, whilst those using the comparative photoinitiators cannot be prepared as such. The liquid blend is preferable as this avoids any problems associated with dissolving the package during preparation of the photopolymerizable composition and shortens the time needed to prepare said compositions.

Photopolymerizable compositions (i.e. formulations comparable to those in Table 2) were prepared by adding the photopolymerizable monomer blend M, the photoinitiator package in the form of liquid blend at room temperature. The formulations were stirred at 40 °C for 1 hour and after cooling at room temperature were spread, with a thickness of 12 microns, on a varnished cardboard using a bar-coater, before being photopolymerized using a light source in the same manner as in Table 3 above.

Formulations equivalent to IE1 and IE3 were prepared in this manner (i.e. by mixing IE5 or IE6 with M in the appropriate ratio) and the results in the surface curing evaluation were identical to those reported in Table 3, demonstrating that the method by which the photopolymerizable composition is prepared is not critical in this instance, with the liquid blends being preferred simply for procedural economy.

## Claims

1. A photoinitiator package comprising:
a) one or more bisacylphosphine oxide photoinitiators, each having a structure according to formula (I): 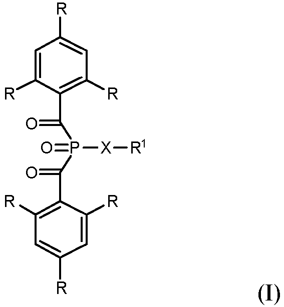
wherein each instance of R is independently selected from the group consisting of C₁-C₄ alkyl;
wherein X is a direct single bond;
wherein R¹ is selected from the group consisting of C₁-C₄₀ alkyl and interrupted C₂-C₄₀ alkyl being interrupted by one or more O or C₃-C₈ cycloalkylene, wherein said C₁-C₄₀ alkyl or interrupted C₂-C₄₀ alkyl may be unsubstituted or substituted by one or more groups selected from OH and R²;
wherein R² is 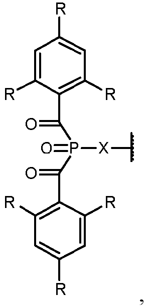
b) one or more optical brightener sensitizers,
wherein the photoinitiator package may also comprise one or more amines, and
if further components other than the one or more bisacylphosphine oxide photoinitiators having a structure according to formula (I), the one or more optical brightener sensitizers and the optional one or more amines are present, then they are further Type-I or Type-II photoinitiators.

2. The photoinitiator package according to claim 1, wherein each instance of R is Me.

3. The photoinitiator package according to claim 1 or claim 2, wherein R¹ is selected from the group consisting of C₁-C₂₀ alkyl, -(CH₂CH₂O-)ₙCH₃, and
-(CH₂CH₂O-)ₙH, wherein n is an integer in the range from 1 to 20, more preferably R¹ is C₁-C₂₀ alkyl.

4. The photoinitiator package according to claim 1 or claim 2, wherein R¹ has a structure according to formula (II): 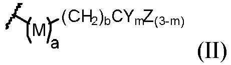
wherein each instance of M is independently selected from (CH₂CH₂O) and (CH₂CH(CH₃)O);
wherein each instance of Y is independently selected from hydrogen and C₁-C₄ alkyl;
wherein each instance of Z has the structure CH₂(M¹)_{c}R²;
wherein each instance of M¹ is independently selected from (OCH₂CH₂) and (OCH(CH₃)CH₂)
wherein a is an integer in the range from 0 to 15;
wherein b is an integer in the range from 0 to 6;
wherein each instance of c is independently an integer in the range from 0 to 15;
wherein m is an integer in the range from 0 to 2; and
wherein each instance of X is independently selected from the group consisting of
-CH₂CO₂-, and -CH₂CH₂CO₂-.

5. The photoinitiator package according to any one of the preceding claims, wherein at least one of the one or more optical brightener sensitizers has a structure according to formula (III): 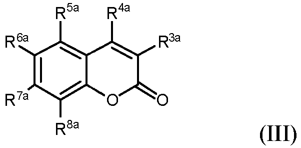
wherein R^{3a} is selected from the group consisting of hydrogen, C₁-C₁₀ alkyl, C₆-C₁₄ aryl, and C₆-C₁₄ heteroaryl,
R^{4a} is selected from the group consisting of hydrogen, C₁-C₁₀ alkyl, wherein said C₁-C₁₀ alkyl may be substituted by one or more fluorine atoms, and OR^{1a}, and
each of R^{5a} to R^{8a} is independently selected from the group consisting of hydrogen, halogen, C₁-C₁₀ alkyl, OR^{1a}, and NR^{2a}₂;
wherein each instance of R^{1a} is independently selected from hydrogen, C₁-C₁₀ alkyl and C₆-C₁₄ aryl, and each instance of R^{2a} is independently selected from hydrogen, C₁-C₁₀ alkyl and C₆-C₁₄ aryl, wherein each instance of R^{1a} to R^{8a} may optionally be joined to one or more further instances of R^{1a} to R^{8a} to form one or more 5-membered or 6-membered rings.

6. The photoinitiator package according to any one of the preceding claims, wherein at least one of the one or more optical brightener sensitizers has a structure according to formula (IV): 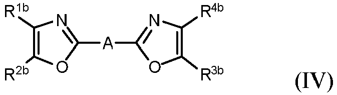
wherein each of R^{1b} to R^{4b} is independently selected from the group consisting of hydrogen, C₁-C₁₀ alkyl and C₆-C₁₄ aryl, wherein R^{1b} and R^{2b} may be joined to form a 6-membered saturated or unsaturated ring, which may be substituted by one or more substituents selected from the group consisting of hydrogen, C₁-C₁₀ alkyl and C₆-C₁₄ aryl, and wherein R^{3b} and R^{4b} may be joined to form a 6-membered ring, which may be substituted by one or more substituents selected from the group consisting of hydrogen, C₁-C₁₀ alkyl and C₆-C₁₄ aryl; and wherein A represents a linking group represented by any of the following formulas (V) to (IX): 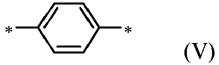 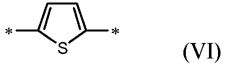 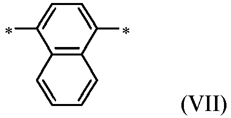 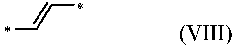 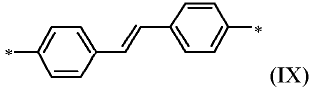
wherein each * represents a bonding position of A in each formula

7. The photoinitiator package according to claim 6, wherein at least one of the one or more optical brightener sensitizers has a structure according to formula (X): 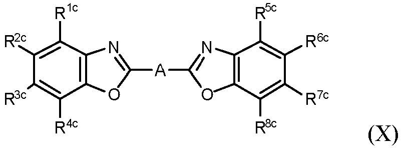 wherein each of R^{1c} to R^{8c} is independently selected from the group consisting of hydrogen, C₁-C₁₀ alkyl and C₆-C₁₄ aryl.

8. The photoinitiator package according to any one of the preceding claims, wherein the photoinitiator package comprises:
a) an amount in the range from 40 to 99.9 wt.-%, more preferably in the range from 60 to 99.0 wt.-%, most preferably in the range from 65 to 97.0 wt.-%, relative to the total weight of the photoinitiator package, of the one or more bisacylphosphine oxide photoinitiators having a structure according to formula (I);
b) an amount in the range from 0.1 to 50 wt.-%, more preferably in the range from 1.0 to 40 wt.-%, most preferably in the range from 3.0 to 35 wt.-%, relative to the total weight of the photoinitiator package, of the one or more optical brightener sensitizers; and
c) optionally, an amount in the range from 1.0 to 45 wt.-%, more preferably in the range from 3.0 to 35 wt.-%, most preferably in the range from 5.0 to 30 wt.-%, relative to the total weight of the photoinitiator package, of one or more amines
wherein if further components other than the one or more bisacylphosphine oxide photoinitiators having a structure according to formula (I), the one or more optical brightener sensitizers and the one or more amines are present, then they are further Type-I or Type-II photoinitiators.

9. The photoinitiator package according to any one of the preceding claims, being present in the form of a blend that is liquid at 25 °C and standard pressure.

10. A photopolymerizable composition, comprising:
a) one or more ethylenically unsaturated, free-radical polymerizable compounds;
b) the photoinitiator package according to any one of claims 1 to 9.

11. The photopolymerizable composition according to claim 10, wherein the photopolymerizable composition comprises:
a) an amount in the range from 30 to 99.0 wt.-%, more preferably in the range from 50 to 95.0 wt.-%, most preferably in the range from 70 to 90 wt.-%, relative to the total weight of the photopolymerizable composition, of the one or more ethylenically unsaturated, free-radical polymerizable compounds;
b) an amount in the range from 0.5 to 50 wt.-%, more preferably in the range from 0.8 to 40 wt.-%, most preferably in the range from 1.0 to 30 wt.-%, relative to the total weight of the photopolymerizable composition, of the photoinitiator package according to any one of claims 1 to 9.

12. The photopolymerizable composition according to claim 10 or claim 11, wherein the photopolymerizable composition further comprises one or more, of the following components:
c) an amount in the range from 0.1 to 30 wt.-%, more preferably in the range from 1.0 to 25 wt.-%, most preferably in the range from 10 to 20 wt.-%, relative to the total weight of the photopolymerizable composition, of one or more pigments;
d) an amount in the range from 5.0 to 60 wt.-%, more preferably in the range from 8.0 to 50 wt.-%, most preferably in the range from 10 to 40 wt.-%, relative to the total weight of the photopolymerizable composition, of one or more binders; and
e) an amount in the range from 0.01 to 10 wt.-%, more preferably in the range from 0.01 to 8.0 wt.-%, most preferably in the range from 0.01 to 5.0 wt.-%, relative to the total weight of the photopolymerizable composition, of one or more additives.

13. A method for photocuring photopolymerizable compositions, coatings, adhesives and inks, said method comprising the following steps in the given order:
a) coating or printing the photopolymerizable composition according to any one of claims 10 to 12 onto a substrate, and
b) photopolymerizing said coated or printed composition with a light source on said substrate.

14. A use of the photoinitiator package according to any one of claims 1 to 9 in the production of printing inks, screen-printing inks, gravure printing inks, solder masks, etch offset-printing inks, flexographic- printing inks, gravure printing inks, ink jet inks, resist material, insulators, encapsulants, image-recording material, solder mask, passivation layer, protective coating, 3D-printing objects and molds, holographic applications, optical fiber coating, waveguide and lens, overprint varnish, wood, vinyl, metal and plastic coatings.

## Patentansprüche

1. Photoinitiator-Paket, umfassend:
a) einen oder mehrere Bisacylphosphinoxid-Photoinitiatoren, die jeweils eine Struktur gemäß Formel (I) aufweisen: 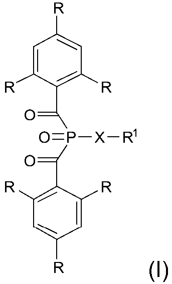
wobei jedes R unabhängig aus der Gruppe ausgewählt ist, die aus C₁-C₄-Alkyl besteht,
wobei X eine direkte Einfachbindung ist,
wobei R¹ aus der Gruppe ausgewählt ist, die aus C₁-C₄₀-Alkyl und unterbrochenem C₂-C₄₀-Alkyl besteht, das durch ein oder mehrere O- oder C₃-C₈-Cycloalkylen unterbrochen ist, wobei das C₁-C₄₀-Alkyl oder das unterbrochene C₂-C₄₀-Alkyl unsubstituiert oder durch eine oder mehrere Gruppen substituiert sein kann, die aus OH und R² ausgewählt sind, wobei R² 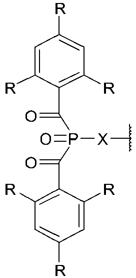 ist,
b) einen oder mehrere optische Aufheller-Sensilbilisatoren,
wobei das Photoinitiator-Paket auch ein oder mehrere Amine enthalten kann, und wenn neben den einen oder mehreren Bisacylphosphinoxid-Photoinitiatoren, die eine Struktur gemäß Formel (I) aufweisen, den einen oder mehreren optischen Aufheller-Sensilbilisatoren und den optionalen einen oder mehreren Aminen weitere Komponenten vorhanden sind, es sich um weitere Photoinitiatoren vom Typ I oder Typ II handelt.

2. Photoinitiator-Paket nach Anspruch 1, wobei R jeweils für Me steht.

3. Photoinitiator-Paket nach Anspruch 1 oder 2, wobei R¹ aus der Gruppe ausgewählt ist, die aus C₁-C₂₀-Alkyl, -(CH₂CH₂O-)ₙCH₃ und -(CH₂CH₂O-)ₙH besteht, wobei n eine ganze Zahl im Bereich von 1 bis 20 ist, wobei R¹ besonders bevorzugt ein C₁-C₂₀-Alkyl ist.

4. Photoinitiator-Paket nach Anspruch 1 oder 2, wobei R¹ eine Struktur gemäß der Formel (II) aufweist: 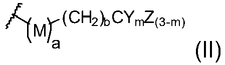
wobei jedes M unabhängig aus (CH₂CH₂O) und (CH₂CH(CH₃)O) ausgewählt ist,
wobei jedes Y unabhängig aus Wasserstoff und C₁-C₄-Alkyl ausgewählt ist,
wobei jedes Z die Struktur CH₂(M¹)_{c}R² aufweist,
wobei jedes M¹ unabhängig aus (OCH₂CH₂) und (OCH(CH₃)CH₂) ausgewählt ist,
wobei a eine ganze Zahl im Bereich von 0 bis 15 ist,
wobei b eine ganze Zahl im Bereich von 0 bis 6 ist,
wobei jedes c unabhängig eine ganze Zahl im Bereich von 0 bis 15 ist,
wobei m eine ganze Zahl im Bereich von 0 bis 2 ist und
wobei jedes X unabhängig aus der Gruppe ausgewählt ist, die aus -CH₂CO₂- und -CH₂CH₂CO₂- besteht.

5. Photoinitiator-Paket nach einem der vorhergehenden Ansprüche, wobei mindestens einer der optischen Aufheller-Sensibilisatoren eine Struktur gemäß Formel (III) aufweist: 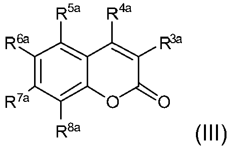
wobei R^{3a} aus der Gruppe ausgewählt ist, die aus Wasserstoff, C₁-C₁₀-Alkyl, C₆-C₁₄-Aryl und C₆-C₁₄-Heteroaryl besteht,
R^{4a} aus der Gruppe ausgewählt ist, die aus Wasserstoff, C₁-C₁₀-Alkyl, wobei das C₁-C₁₀-Alkyl durch ein oder mehrere Fluoratome substituiert sein kann, und OR^{1a} besteht und
R^{5a} bis R^{8a} jeweils unabhängig aus der Gruppe ausgewählt ist, die aus Wasserstoff, Halogen, C₁-C₁₀-Alkyl, OR^{1a} und NR^{2a}₂ besteht,
wobei jede Instanz von R^{1a} unabhängig aus Wasserstoff, C₁-C₁₀-Alkyl und C₆-C₁₄-Aryl ausgewählt ist und jede Instanz von R^{2a} unabhängig aus Wasserstoff, C₁-C₁₀-Alkyl und C₆-C₁₄-Aryl ausgewählt ist, wobei jede Instanz von R^{1a} bis R^{8a} optional mit einer oder mehreren weiteren Instanzen von R^{1a} bis R^{8a} verbunden sein kann, so dass sich ein oder mehrere 5- oder 6-gliedrigen Ring(e) bildet bzw. bilden.

6. Photoinitiator-Paket nach einem der vorhergehenden Ansprüche, wobei mindestens einer der einen oder der mehreren optischen Aufheller-Sensibilisatoren eine Struktur gemäß Formel (IV) aufweist: 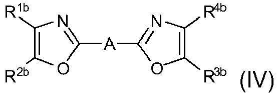
wobei R^{1b} bis R^{4b} jeweils unabhängig voneinander aus der Gruppe ausgewählt sind, die aus Wasserstoff, C₁-C₁₀-Alkyl und C₆-C₁₄-Aryl besteht, wobei R^{1b} und R^{2b} zu einem sechsgliedrigen gesättigten oder ungesättigten Ring verbunden sein können, der durch einen oder mehrere Substituenten substituiert sein kann, der aus der Gruppe ausgewählt ist, die aus Wasserstoff, C₁-C₁₀-Alkyl und C₆-C₁₄-Aryl besteht, und wobei R^{3b} und R^{4b} zu einem sechsgliedrigen Ring verbunden sein können, der durch einen oder mehrere Substituenten substituiert sein kann, der aus der Gruppe ausgewählt ist, die aus Wasserstoff, C₁-C₁₀-Alkyl und C₆-C₁₄-Aryl besteht, und wobei A eine Verknüpfungsgruppe repräsentiert, die durch eine der folgenden Formeln (V) bis (IX) repräsentiert wird: 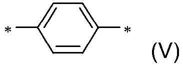 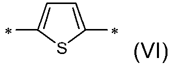 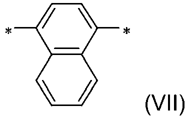 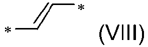 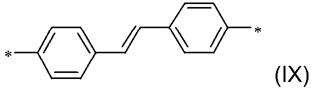
wobei jedes * eine Bindungsposition von A in der jeweiligen Formel repräsentiert.

7. Photoinitiator-Paket nach Anspruch 6, wobei mindestens einer der einen oder der mehreren optischen Aufheller-Sensibilisatoren eine Struktur gemäß Formel (X) aufweist: 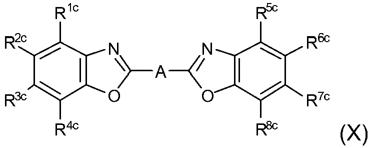 wobei R^{1c} bis R^{8c} jeweils unabhängig aus der Gruppe ausgewählt ist, die aus Wasserstoff, C₁-C₁₀-Alkyl und C₆-C₁₄-Aryl besteht.

8. Photoinitiatorpaket nach einem der vorhergehenden Ansprüche, wobei das Photoinitiatorpaket Folgendes umfasst:
a) eine Menge im Bereich von 40 bis 99,9 Gew.-%, bevorzugt im Bereich von 60 bis 99,0 Gew.-%, am meisten bevorzugt im Bereich von 65 bis 97,0 Gew.-%, bezogen auf das Gesamtgewicht des Photoinitiatorpakets, eines oder mehrerer Bisacylphosphinoxid-Photoinitiatoren, die eine Struktur gemäß Formel (I) aufweisen,
b) eine Menge im Bereich von 0,1 bis 50 Gew.-%, bevorzugt im Bereich von 1,0 bis 40 Gew.-%, am meisten bevorzugt im Bereich von 3,0 bis 35 Gew.-%, bezogen auf das Gesamtgewicht des Photoinitiatorpakets, eines oder mehrerer optischer Aufheller-Sensibilisatoren, und
c) optional eine Menge im Bereich von 1,0 bis 45 Gew.-%, bevorzugt im Bereich von 3,0 bis 35 Gew.-%, am meisten bevorzugt im Bereich von 5,0 bis 30 Gew.-%, bezogen auf das Gesamtgewicht des PhotoinitiatorPakets, eines oder mehrerer Amine,
wobei, wenn neben den einen oder mehreren Bisacylphosphinoxid-Photoinitiatoren, die eine Struktur gemäß Formel (I) aufweisen, den einen oder mehreren optischen Aufheller-Sensilbilisatoren und den einen oder mehreren Aminen weitere Komponenten vorhanden sind, es sich um weitere Photoinitiatoren vom Typ I oder Typ 11 handelt.

9. Photoinitiator-Paket nach einem der vorhergehenden Ansprüche, welches als Mischung vorliegt, die bei 25 °C und Normaldruck flüssig ist.

10. Photopolymerisierbare Zusammensetzung, umfassend:
a) eine oder mehrere ethylenisch ungesättigte, radikalisch polymerisierbare Verbindungen,
b) das Photoinitiator-Paket nach einem der Ansprüche 1 bis 9.

11. Photopolymerisierbare Zusammensetzung nach Anspruch 10, wobei die photopolymerisierbare Zusammensetzung Folgendes umfasst:
a) eine Menge im Bereich von 30 bis 99,0 Gew.-%, bevorzugt im Bereich von 50 bis 95,0 Gew.-%, am meisten bevorzugt im Bereich von 70 bis 90 Gew.-%, bezogen auf das Gesamtgewicht der photopolymerisierbaren Zusammensetzung, einer oder mehrerer ethylenisch ungesättigter, radikalisch polymerisierbarer Verbindungen,
b) eine Menge im Bereich von 0,5 bis 50 Gew.-%, bevorzugt im Bereich von 0,8 bis 40 Gew.-%, am meisten bevorzugt im Bereich von 1,0 bis 30 Gew.-%, bezogen auf das Gesamtgewicht der photopolymerisierbaren Zusammensetzung, des Photoinitiatorpakets gemäß einem der Ansprüche 1 bis 9.

12. Photopolymerisierbare Zusammensetzung nach Anspruch 10 oder 11, wobei die photopolymerisierbare Zusammensetzung ferner eine oder mehrere der folgenden Komponenten umfasst:
c) eine Menge im Bereich von 0,1 bis 30 Gew.-%, bevorzugt im Bereich von 1,0 bis 25 Gew.-%, am meisten bevorzugt im Bereich von 10 bis 20 Gew.-%, bezogen auf das Gesamtgewicht der photopolymerisierbaren Zusammensetzung, eines oder mehrerer Pigmente,
d) eine Menge von 5,0 bis 60 Gew.-%, bevorzugt von 8,0 bis 50 Gew.-%, am meisten bevorzugt von 10 bis 40 Gew.-%, bezogen auf das Gesamtgewicht der photopolymerisierbaren Zusammensetzung, eines oder mehrerer Bindemittel, und
e) eine Menge von 0,01 bis 10 Gew.-%, bevorzugt von 0,01 bis 8,0 Gew.-%, am meisten bevorzugt von 0,01 bis 5,0 Gew.-%, bezogen auf das Gesamtgewicht der photopolymerisierbaren Zusammensetzung, eines oder mehrerer Additive.

13. Verfahren zur Lichthärtung von lichthärtenden Zusammensetzungen, Beschichtungen, Klebstoffen und Tinten, wobei das Verfahren die folgenden Schritte in der angegebenen Reihenfolge umfasst:
a) Beschichten oder Bedrucken eines Substrats mit der lichthärtenden Zusammensetzung gemäß einem der Ansprüche 10 bis 12 und
b) Lichthärten der beschichteten oder bedruckten Zusammensetzung auf dem Substrat mit einer Lichtquelle.

14. Verwendung des Photoinitiator-Pakets gemäß einem der Ansprüche 1 bis 9 zur Herstellung von Druckfarben, Siebdruckfarben, Tiefdruckfarben, Lötstopplacken, Ätz-Offsetdruckfarben, Flexodruckfarben, Tiefdruckfarben, Tintenstrahlfarben, Resistmaterialien, Isolatoren, Vergussmassen, Bildaufzeichnungsmaterialien, Lötstopplacken, Passivierungsschichten, Schutzbeschichtungen, 3D-Druckobjekten und -formen, holografischen Anwendungen, Glasfaserbeschichtungen, Wellenleitern und Linsen, Überdrucklacken und Beschichtungen für Holz, Vinyl, Metall und Kunststoff.

## Revendications

1. Ensemble photoinitiateur comprenant :
a) un ou plusieurs photoinitiateurs oxyde de bisacylphosphine, chacun ayant une structure selon la formule (I): 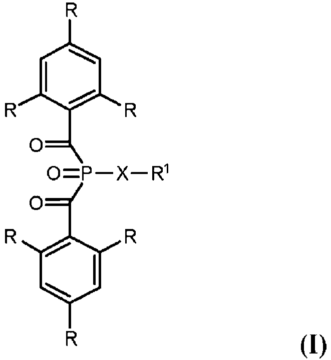
dans lequel chaque instance de R est sélectionnée indépendamment parmi le groupe consistant en C₁-C₄ alkyle ;
dans lequel X est une liaison simple directe ;
dans lequel R¹ est sélectionné parmi le groupe consistant en C₁-C₄₀ alkyle et C₂-C₄₀ alkyle interrompu qui est interrompu par un ou plusieurs O ou C₃-C₈ cycloalkylènes, dans lequel ledit C₁-C₄₀ alkyle ou C₂-C₄₀ alkyle interrompu peut être non substitué ou substitué par un ou plusieurs groupes sélectionnés parmi OH et R² ;
dans lequel R² est 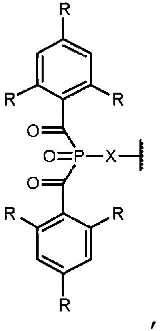
b) un ou plusieurs sensibilisateurs azurants optiques,
dans lequel l'ensemble photoinitiateur peut également comprendre une ou plusieurs amines, et
si des composants supplémentaires autres que les un ou plusieurs photoinitiateurs oxyde de bisacylphosphine ayant une structure selon la formule (I), les un ou plusieurs sensibilisateurs azurants optiques et les une ou plusieurs amines optionnelles sont présents, il s'agit alors de photoinitiateurs de type I ou de type II supplémentaires.

2. Ensemble photoinitiateur selon la revendication 1, dans lequel chaque instance de R est Me.

3. Ensemble photoinitiateur selon la revendication 1 ou la revendication 2, dans lequel R¹ est sélectionné parmi le groupe consistant en C₁-C₂₀ alkyle, -(CH₂CH₂O-)ₙCH₃, et
-(CH₂CH₂O-)ₙH, dans lequel n est un entier dans la plage de 1 à 20, plus préférentiellement R¹ est C₁-C₂₀ alkyle.

4. Ensemble photoinitiateur selon la revendication 1 ou la revendication 2, dans lequel R¹ a une structure selon la formule (II): 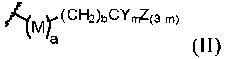
dans lequel chaque instance de M est sélectionnée indépendamment parmi (CH₂CH₂O) et (CH₂CH(CH₃)O) ;
chaque instance de Y est indépendamment sélectionnée parmi hydrogène et C₁-C₄ alkyle ;
dans lequel chaque instance de Z a la structure CH₂(M¹)_{c}R² ;
dans lequel chaque instance de M¹ est sélectionnée indépendamment parmi (OCH₂CH₂) et (OCH(CH₃)CH₂)
dans lequel a est un entier dans la plage de 0 à 15 ;
dans lequel b est un entier dans la plage de 0 à 6 ;
dans lequel chaque instance de c est indépendamment un entier dans la plage de 0 à 15 ;
dans lequel m est un entier dans la plage de 0 à 2 ; et
dans lequel chaque instance de X est sélectionnée indépendamment parmi le groupe consistant en -CH₂CO₂- et -CH₂CH₂CO₂-.

5. Ensemble photoinitiateur selon l'une des revendications précédentes, dans lequel au moins l'un des un ou plusieurs sensibilisateurs azurants optiques a une structure selon la formule (III) : 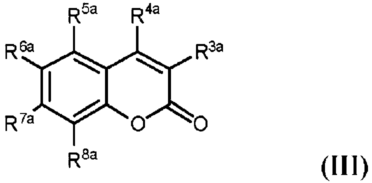
dans lequel R^{3a} est sélectionné parmi le groupe consistant en hydrogène, C₁-C₁₀ alkyle, C₆-C₁₄ aryle et C₆-C₁₄ hétéroaryle,
R^{4a} est sélectionné parmi le groupe consistant en hydrogène, C₁-C₁₀ alkyle, dans lequel ledit C₁-C₁₀ alkyle peut être substitué par un ou plusieurs atomes de fluor, et OR^{1a}, et
chacun de R^{5a} à R^{8a} est sélectionné indépendamment parmi le groupe consistant en hydrogène, halogène, C₁-C₁₀ alkyle, OR^{1a} et NR^{2a}₂ ;
dans lequel chaque instance de R^{1a} est sélectionnée indépendamment parmi hydrogène, C₁-C₁₀ alkyle et C₆-C₁₄ aryle, et chaque instance de R^{2a} est sélectionnée indépendamment parmi hydrogène, C₁-C₁₀ alkyle et C₆-C₁₄ aryle, dans lequel chaque instance de R^{1a} à R^{8a} peut optionnellement être jointe à une ou plusieurs instances supplémentaires de R^{1a} à R^{8a} pour former un ou plusieurs cycles à 5 chaînons ou 6 chaînons.

6. Ensemble photoinitiateur selon l'une des revendications précédentes, dans lequel au moins l'un des un ou plusieurs sensibilisateurs azurants optiques a une structure selon la formule (IV) : 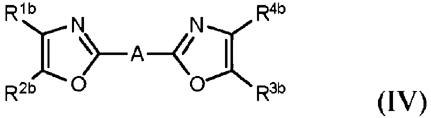
dans lequel chacun de R^{1b} à R^{4b} est sélectionné indépendamment parmi le groupe consistant en hydrogène, C₁-C₁₀ alkyle et C₆-C₁₄ aryle, dans lequel R^{1b} et R^{2b} peuvent être joints pour former un cycle saturé ou insaturé à 6 chaînons, qui peut être substitué par un ou plusieurs substituants sélectionnés parmi le groupe consistant en hydrogène, C₁-C₁₀ alkyle et C₆-C₁₄ aryle, et dans lequel R^{3b} et R^{4b} peuvent être joints pour former un cycle à 6 chaînons, qui peut être substitué par un ou plusieurs substituants sélectionnés parmi le groupe consistant en hydrogène, C₁-C₁₀ alkyle et C₆-C₁₄ aryle ; et
dans lequel A représente un groupe de liaison représenté par l'une des formules (V) à (IX) suivantes : 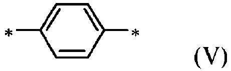 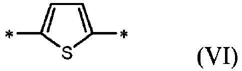 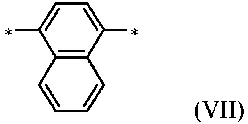 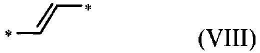 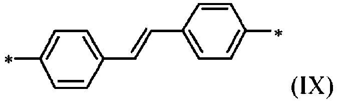
dans lequel chaque * représente une position de liaison de A dans chaque formule.

7. Ensemble photoinitiateur selon la revendication 6, dans lequel au moins l'un des un ou plusieurs sensibilisateurs azurants optiques a une structure selon la formule (X) : 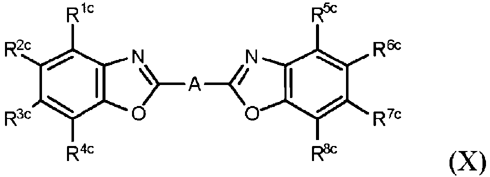 dans lequel chacun de R^{1c} à R^{8c} est sélectionné indépendamment parmi le groupe consistant en hydrogène, C₁-C₁₀ alkyle et C₆-C₁₄ aryle.

8. Ensemble photoinitiateur selon l'une des revendications précédentes, dans lequel l'ensemble photoinitiateur comprend :
a) une quantité dans la plage de 40 à 99,9 % en poids, plus préférentiellement dans la plage de 60 à 99,0 % en poids, le plus préférentiellement dans la plage de 65 à 97,0 % en poids, par rapport au poids total de l'ensemble photoinitiateur, des un ou plusieurs photoinitiateurs oxyde de bisacylphosphine ayant une structure selon la formule (I) ;
b) une quantité dans la plage de 0,1 à 50 % en poids, plus préférentiellement dans la plage de 1,0 à 40 % en poids, le plus préférentiellement dans la plage de 3,0 à 35 % en poids, par rapport au poids total de l'ensemble photoinitiateur, des un ou plusieurs sensibilisateurs azurants optiques ; et
c) optionnellement, une quantité dans la plage de 1,0 à 45 % en poids, plus préférentiellement dans la plage de 3,0 à 35 % en poids, le plus préférentiellement dans la plage de 5,0 à 30 % en poids, par rapport au poids total de l'ensemble photoinitiateur, d'une ou de plusieurs amines
dans lequel si des composants supplémentaires autres que les un ou plusieurs photoinitiateurs oxyde de bisacylphosphine ayant une structure selon la formule (I), les un ou plusieurs sensibilisateurs azurants optiques et les une ou plusieurs amines sont présents, il s'agit alors de photoinitiateurs de type I ou de type II supplémentaires.

9. Ensemble photoinitiateur selon l'une des revendications précédentes, qui est présent sous la forme d'un mélange qui est liquide à 25 °C et pression standard.

10. Composition photopolymérisable, comprenant :
a) un ou plusieurs composés polymérisables à radicaux libres éthyléniquement insaturés ;
b) l'ensemble photoinitiateur selon l'une des revendications 1 à 9.

11. Composition photopolymérisable selon la revendication 10, dans laquelle la composition photopolymérisable comprend :
a) une quantité dans la plage de 30 à 99,0 % en poids, plus préférentiellement dans la plage de 50 à 95,0 % en poids, le plus préférentiellement dans la plage de 70 à 90 % en poids, par rapport au poids total de la composition photopolymérisable, des un ou plusieurs composés polymérisables à radicaux libres éthyléniquement insaturés ;
b) une quantité dans la plage de 0,5 à 50 % en poids, plus préférentiellement dans la plage de 0,8 à 40 % en poids, le plus préférentiellement dans la plage de 1,0 à 30 % en poids, par rapport au poids total de la composition photopolymérisable, de l'ensemble photoinitiateur selon l'une des revendications 1 à 9.

12. Composition photopolymérisable selon la revendication 10 ou la revendication 11, dans laquelle la composition photopolymérisable comprend en outre un ou plusieurs, parmi les composants suivants :
c) une quantité dans la plage de 0,1 à 30 % en poids, plus préférentiellement dans la plage de 1,0 à 25 % en poids, le plus préférentiellement dans la plage de 10 à 20 % en poids, par rapport au poids total de la composition photopolymérisable, d'un ou de plusieurs pigments ;
d) une quantité dans la plage de 5,0 à 60 % en poids, plus préférentiellement dans la plage de 8,0 à 50 % en poids, le plus préférentiellement dans la plage de 10 à 40 % en poids, par rapport au poids total de la composition photopolymérisable, d'un ou de plusieurs liants ; et
e) une quantité dans la plage de 0,01 à 10 % en poids, plus préférentiellement dans la plage de 0,01 à 8,0 % en poids, le plus préférentiellement dans la plage de 0,01 à 5,0 % en poids, par rapport au poids total de la composition photopolymérisable, d'un ou de plusieurs additifs.

13. Procédé de photodurcissement de compositions photopolymérisables, de revêtements, d'adhésifs et d'encres, ledit procédé comprenant les étapes suivantes dans l'ordre donné :
a) le revêtement ou l'impression de la composition photopolymérisable selon l'une des revendications 10 à 12 sur un substrat, et
b) la photopolymérisation de ladite composition revêtue ou imprimée avec une source de lumière sur ledit substrat.

14. Utilisation de l'ensemble photoinitiateur selon l'une des revendications 1 à 9 dans la production de : encres d'impression, encres de sérigraphie, encres d'héliogravure, masques de soudure, encres d'impression offset par gravure, encres d'impression flexographique, encres d'héliogravure, encres à jet d'encre, matériau de réserve, isolants, encapsulants, matériau d'enregistrement d'image, masque de brasage, couche de passivation, revêtement de protection, objets et moules d'impression 3D, applications holographiques, revêtement de fibre optique, guide d'ondes et lentille, vernis de surimpression, revêtements pour bois, vinyle, métal et plastique.
